# EUROPEAN PATENT APPLICATION

(11) **EP 4 797 759 A1**
(43) Date of publication of application: **26.08.2026**
(21) Application number: 24884762.6
(22) Date of filing: 29.10.2024
(51) Int. Cl.: H04W 12/60, H04W 36/00, H04W 12/03, H04W 12/04, H04W 12/06, H04W 12/10

(54) **COMMUNICATION METHOD AND RELATED APPARATUS**

(30) Priority: 31.10.2023 CN 202311444648
(71) Applicant: Huawei Technologies Co., Ltd., Shenzhen, Guangdong 518129 (CN)
(72) Inventor: WANG, Yong, Shenzhen, Guangdong 518129 (CN); WANG, Yali, Shenzhen, Guangdong 518129 (CN)
(74) Representative: Goddar, Heinz J.
(86) International application number: PCT/CN2024/128289
(87) International publication number: WO 2025/092760

(57) **Abstract**

A communication method and a related apparatus are provided, and are applied to the field of communication technologies. A second management node in embodiments of this application may receive a secure communication parameter from a first management node, where the secure communication parameter includes a parameter used when the first management node communicates with a terminal node and is associated with a security context of the terminal node. The second management node performs, based on the secure communication parameter, an association operation having the security context with the terminal node. In this way, the second management node may directly or indirectly use the security communication parameter to ensure security of information exchanged in the association operation. When performing the association operation with the terminal node, the second management node does not need to re-negotiate the security context with the terminal node, thereby reducing signaling exchange and reducing an association delay. In addition, there is no need to re-determine the secure communication parameter, negotiate the security context, and the like, thereby reducing calculation workloads of the terminal node and the second management node, and further shortening a connection establishment delay.

## Description

This application claims priority to Chinese Patent Application No. 202311444648.3, filed with the China National Intellectual Property Administration on October 31, 2023 and entitled "COMMUNICATION METHOD AND RELATED APPARATUS", which is incorporated herein by reference in its entirety.

### TECHNICAL FIELD

This application relates to the field of communication technologies, and in particular, to the field of short-range communication technologies, for example, communication in scenarios such as intelligent vehicles, smart homes, intelligent terminals, and smart manufacturing, and specifically, to a communication method and a related apparatus.

### BACKGROUND

With continuous development of communication technologies, smart application scenarios such as smart homes, intelligent cockpits, intelligent driving, smart manufacturing, and smart transportation emerge. In the mobile internet era, communication tools are more convenient to use than traditional computers, especially desktop workstations and servers.

As interconnection between communication nodes becomes increasingly common, connections between the communication nodes become increasingly diversified. A roaming scenario is used as an example. A station (station, STA) may access an access point (access point, AP) 1. However, as the STA moves, at another moment, the STA may access an AP 2 that is currently closer to the STA, thereby improving connection stability and ensuring transmission efficiency.

Before a communication node is connected to a new communication node, for example, before the STA needs to establish a connection to the AP 2, the communication node needs to perform a handshake, authentication, and another procedure with the new communication node. These complex connection procedures cause a high delay when the communication node is connected to the new node. To ensure transmission efficiency and improve stability of user services, various service scenarios pose high requirements on a delay of establishing the connection to the new node. For example, in the roaming scenario, real-time applications, such as augmented reality

(augmented reality, AR), online games, and online video conferences, require a media access control (media access control, MAC) layer handover delay to be less than 50 ms. For another example, automated guided vehicles (automated guided vehicle, AGV) usually require a roaming delay to be lower than 50 ms.

How to reduce the delay of connecting the communication node to the new node is an issue in focus of research in the art.

### SUMMARY

Embodiments of this application provide a communication method and a related apparatus, to reduce a delay of establishing a communication connection while ensuring secure communication.

According to a first aspect, an embodiment of this application provides a communication method. The method includes: receiving a secure communication parameter from a first management node, and performing, based on the secure communication parameter, an association operation having the security context with a terminal node.

The method may be applied to the second management node. The secure communication parameter includes a parameter used when the first management node communicates with the terminal node, and the secure communication parameter is associated with the security context of the terminal node. The foregoing security context includes a parameter for performing security protection on communication information, for example, a session key, and further includes a fresh parameter, a key algorithm, or a temporary identity used for performing security protection. The secure communication parameter may include a part of or all of parameters in the security context, or the secure communication parameter may be used to generate a part of or all of parameters in the security context. The association operation with the security context includes: performing security protection (for example, encryption or integrity protection) on transmitted information by using the parameter in the security context, and a peer end may also securely obtain corresponding information by using the parameter in the security context. Security protection includes one or more of encryption, integrity protection, authenticated encryption, and the like.

In this embodiment of this application, when the terminal node is associated with the second management node, the terminal node may perform the association operation having the security context with the terminal node by using the secure communication parameter provided by the first management node. In other words, security of the information exchanged in the association operation is directly or indirectly ensured by using the security communication parameter. The association operation between the second management node and the terminal may be performed without the security context obtained through re-negotiation with the terminal node, so that signaling in an authentication process can be reduced, thereby reducing a signaling exchange delay. In addition, there is no need to re-determine the secure communication parameter, negotiate the security context, and the like, thereby reducing calculation workloads of the terminal node and the second management node, and further shortening a connection establishment delay.

Further, the method further includes: performing data transmission with the second management node after association is established. Further, during data transmission, the secure communication parameter may also be used, or security protection may be performed on the data by using the security context.

In a possible implementation of the first aspect, the security context of the terminal node includes a key. The key herein may include one or more of a shared key, a session key, and the like. Optionally, the session key may further include one or more of an encryption key, an integrity protection key, an authentication encryption key, and the like. Further, the encryption key may include a user plane encryption key, a signaling plane encryption key, and the like. Alternatively, the encryption key may further include a unicast encryption key, a multicast encryption key, or the like. Similarly, the integrity protection key may include a user plane integrity protection key, a signaling plane integrity protection key, or the like, and/or the integrity protection key may include a unicast integrity protection key, a multicast integrity protection key. The authentication encryption key may also include the foregoing keys of the subdivided types, which are not described one by one herein.

In a possible implementation of the first aspect, when the security context includes the key, the security context may further include information about the key, where the information about the key includes one or more of an identifier of the key, a validity period of the key, start time of the key, and the like. For example, the security context includes a shared key, an ID of the shared key, and a validity period of the shared key. Certainly, when there are a plurality of keys, this application does not limit that information about each key exists in the security context. For example, the security context may include the integrity protection key, but may not include a validity period of the integrity protection key.

In a possible implementation of the first aspect, the security context of the terminal node includes a fresh parameter. The fresh parameter is a parameter used in a security field, and is used to obtain a key or participate in a security protection process, thereby improving security. The first fresh parameter and the second fresh parameter are example fresh parameters. In some solutions, the first fresh parameter is used to derive the session key, and the second fresh parameter is used as a parameter used for security protection.

In a possible implementation of the first aspect, the security context of the terminal includes information about a security algorithm, for example, indication information of the security algorithm. The security algorithm refers to an algorithm related to security protection, for example, one or more of a key negotiation algorithm, an encryption algorithm, an integrity protection algorithm, an authentication encryption algorithm, a digest algorithm, and a key derivation algorithm.

For example, a possible security context of the terminal includes one or more of the following parameters: a shared key, a first fresh parameter, a session key, an identifier of a security algorithm, a first identity of the terminal node, a second fresh parameter, and the like.

In another possible implementation of the first aspect, the second fresh parameter is determined by using a first number and a second number. The first number corresponds to a number of a protocol data unit (protocol data unit, PDU). For example, the first number is the same as the number of the protocol data unit, or the first number is determined by using the number of the protocol data unit.

The foregoing implementation is an example of the second fresh parameter. The protocol data unit is a data unit transmitted during communication, and the number of the protocol data unit changes with data transmission. Therefore, the second fresh parameter is determined by using the number of the protocol data unit, so that the second fresh parameter can be updated with a change of the number of the protocol data unit, and a value of the second fresh parameter can be updated. Because the second fresh parameter is used for encryption/decryption during communication, the second fresh parameter can be updated after one or more times of encryption/decryption, thereby improving communication security.

Optionally, an initial value of the second number is predetermined. The second number may be updated. For example, the second number is updated when the first number is reversed. Optionally, that the second fresh parameter is determined by using the first number and the second number includes: The second fresh parameter includes the first number and the second number.

For example, the second fresh parameter is data of N bits, the first number includes M bits, the second number includes L bits, and N, M, and L are non-negative integers. A quantity of bits occupied by the L bits of the second number is greater than a quantity of bits occupied by the M bits of the first number. When the M bits of the first number change from all 1s to all 0s, data represented by the L bits of the second number is incremented by 1. Optionally, N=M+L.

Optionally, the second fresh parameter is a global frame number (global frame number), and the GFN includes a high frame number (hyper frame number, HFN) and a serial number (serial number, or sequence number, SN). Optionally, the serial number is the same as the number of the protocol data unit PDU, and the HFN is predetermined.

In a possible implementation of the first aspect, the second fresh parameter is a predefined parameter value, for example, the HFN. Further, the second fresh parameter may be updated by using the number of the protocol data unit. For example, the second fresh parameter is updated when the SN is reversed.

In another possible implementation of the first aspect, the secure communication parameter is the security context of the terminal node.

In this implementation, the first management node may provide the security context of the terminal node obtained by the first management node to another node, so that the second management node can obtain the security context of the terminal node, and obtain, based on the security context of the terminal node, the security context of the terminal node that should be stored by the second management node. For example, a part of or all of parameters in the security context of the terminal node that are provided by the first management node are used as a part of or all of parameters in the security context of the terminal node that should be stored by the second management node. For example, the second management node may use the session key between the first management node and the terminal node to perform communication encryption/decryption.

When the second management node establishes a connection to the terminal node, in the foregoing implementation, a large amount of time may not be required for negotiating and generating the security context, thereby greatly shortening a communication delay.

In another possible implementation of the first aspect, the secure communication parameter includes a part of parameters in the security context, and/or includes a parameter used to obtain the part of parameters in the security context. In this way, the second management node may obtain the security context of the terminal node based on the secure communication parameter and the parameter determined by the second management node.

For example, the secure communication parameter includes a key. The key may be directly used as the session key for security protection in a communication process. Alternatively, the key may be used to derive the session key.

For example, the secure communication parameter includes the shared key, and the method further includes:
obtaining the session key based on the shared key. Further, the session key derived by the second management node is included in the security context of the terminal node. Optionally, the security context further includes the shared key.

Optionally, the fresh parameter, the key identifier, and the like may be further used when the session key is derived. For example, the secure communication parameter includes a shared key Kgt and a first security parameter counter, and the second terminal node derives the user plane encryption key based on the shared key Kgt and the first security parameter counter, and determines the user plane encryption key based on the identifier of the user plane encryption key.

For example, the secure communication parameter further includes the identifier of the shared key and the first fresh parameter, and obtaining the session key based on the shared key includes:
determining the session key based on the shared key, the identifier of the shared key, and the first fresh parameter.

It may be understood that, to re-determine the secure communication parameter, a negotiation procedure needs to be performed, and not only a calculation amount is required, but also a large calculation amount and time are required to ensure security of the negotiation procedure. However, in the foregoing implementation, the second management node determines the security context based on the secure communication parameter, and the security context may be determined without spending a large amount of time on negotiation and generation, thereby greatly shortening the communication delay.

For example, the secure communication parameter further includes the identifier of the security algorithm and the first identity of the terminal node.

In another possible implementation of the first aspect, the session key includes the integrity protection key. Performing, based on the secure communication parameter, the association operation having the security context with the terminal node includes: receiving first information from the terminal node, where integrity of the first information is protected by using the integrity protection key; checking the integrity of the first information based on the integrity protection key; and when a check on the integrity of the first information succeeds, sending second information to the terminal node. Optionally, the second information is used by the terminal node to establish association with the second management node, and integrity of the second information is protected by using the integrity protection key.

In the foregoing implementation, the terminal node and the first management node may perform integrity protection on transmitted signaling by using the security context. This can avoid the first information from being tampered with, and can further authenticate each other's identity through integrity verification (integrity verification can only succeed when both ends have the security context), thereby improving communication security.

Optionally, the session key includes the encryption key, and the second information is encrypted by using the encryption key.

In another possible implementation of the first aspect, the security context of the terminal includes the session key and the identifier of the first security algorithm. The first information includes first verification information, and the first verification information corresponds to the session key, the first information, and the first security algorithm. Checking the integrity of the second information based on the security context of the terminal node includes: verifying the first verification information based on the session key, the first information, and the first security algorithm. For example, the session key is the integrity protection key, and the identifier of the first security algorithm is an identifier of the first integrity protection algorithm.

In the foregoing implementation, the terminal node may generate the verification information by using the session key and the first information, and the second management node may verify the verification information by using the session key in the security context of the terminal node, thereby improving security. It can be learned that the terminal node and the second management node may perform integrity-protected communication based on the session key, without needing to negotiate and determine the session key by exchanging signaling. This reduces signaling overheads, reduces a calculation amount of the node, and reduces a connection establishment delay.

In another possible implementation of the first aspect, the security context includes the first identity of the terminal node, and the first information includes the first identity of the terminal node. The method further includes: obtaining the security context of the terminal node based on the first identity in the first information.

In the foregoing implementation, the security context may correspond to an identity of the node, and the identity of the node may be used by the management node to search for whether the management node has the security context of the terminal, so that the security context of the terminal can be conveniently stored and managed, and convenience of using the security context is improved.

In another possible implementation of the first aspect, the method further includes: generating a second identity of the terminal node, and sending the second identity to the terminal node. Optionally, the identity is used to identify the terminal node, and the second identity is carried in the second information.

In the foregoing implementation, the second management node may generate a new identity, that is, the second identity, for the terminal node, and the second identity is used to correspond to the terminal node. Updating the identity of the terminal node can avoid leakage of a fixed identity of the terminal, improve privacy of the identity of the terminal, and improve communication security.

In another possible implementation of the first aspect, the second fresh parameter in the security context may be determined by the second management node. For example, the second fresh parameter may be predefined, for example, may be set to a 128-bit all-zero value or a preset value.

In another possible implementation of the first aspect, the security context of the terminal node includes the second fresh parameter. The method further includes: determining a first number based on a number of a protocol data unit PDU from the terminal node, and determining the second fresh parameter based on a second number and the first number. An initial value of the second number is predetermined, and the second number is updated when the first number is reversed.

The foregoing describes a manner of determining the second fresh parameter. The second fresh parameter is determined based on the second number and the first number, where the second number may be predefined, and the first number is determined based on the PDU from the terminal node.

In one aspect, the foregoing manner may enable the second management node to use the second fresh parameter determined by the second management node to perform subsequent security protection, and avoid using the second fresh parameter (or the second number) that is consistent with the first management node, thereby improving security. In another aspect, if the second fresh parameter determined by the first management node is used, because the number of the PUD is updated after each time of transmission, and the second number may also be updated, the second management node may receive the second fresh parameter or an updated value of a part of data in the second fresh parameter for a plurality of times, thereby increasing transmission pressure of the node. If the second fresh parameter determined by the second management node is used, transmission pressure of the second management node can be alleviated, and signaling overheads can be reduced.

In another possible implementation of the first aspect, the method further includes: receiving parameter update information from the first management node; and updating a part of or all of parameters in the secure communication parameter based on the parameter update information. Updating the part of or all of the parameters in the secure communication parameter may include updating a part of or all of parameters in the security context.

In some scenarios, when the first management node updates a parameter in the communication parameter, the first management node may indicate, by using the parameter update information, another node to update the secure communication parameter, so that the second management node can use a latest and correct security context when connecting to the terminal node, thereby improving a connection establishment success rate.

For example, the secure communication parameter of the terminal includes the shared key, the identifier of the shared key, and a validity period of the shared key, and the parameter update information includes an updated shared key, a validity period of the updated shared key, and the validity period of the updated shared key.

For example, the secure communication parameter of the terminal includes the first fresh parameter, and the parameter update information includes an updated first fresh parameter.

For example, the secure communication parameter of the terminal includes the second fresh parameter, and the parameter update information includes an updated second fresh parameter.

For example, the secure communication parameter of the terminal includes a part of the second fresh parameter, and the parameter update information includes a part of an updated second fresh parameter.

In another possible implementation of the first aspect, the first management node is directly connected to or indirectly connected to the second management node, where the connection herein may be wired or wireless. When the first management node and the second management node are directly connected, the second management node may receive the secure communication parameter sent by the first management node. The indirect connection may be performed by using an intermediate node, and the intermediate node forwards information between the first management node and the second management node.

For example, receiving the secure communication parameter from the first management node includes: receiving the secure communication parameter forwarded by a control node, where the control node is communicatively connected to the first management node and the second management node. In this case, the control node serves as the intermediate node. The first management node may send the secure communication parameter to the control node, and then the control node provides the secure communication parameter for the second management node. It should be understood that there may be one or more intermediate nodes.

Optionally, the first management node is connected to the terminal node through a wireless communication link, and the first management node, the second management node, and the AC are connected through a wired communication link.

In another possible implementation of the first aspect, the secure communication parameter is transmitted by using a packet that complies with a CAPWAP protocol. The CAPWAP protocol performs security protection on transmitted information, and can improve privacy of the secure communication parameter. For example, the first management node may provide the secure communication parameter for the control node through a CAPWAP tunnel, and the control node also provides the secure communication parameter for the second management node through the CAPWAP tunnel.

In another possible implementation of the first aspect, the method further includes: when association fails, performing an association operation without the security context with the terminal node.

For example, when the second management node does not have the security context of the terminal node, integrity protection key verification fails, or the second management node does not support a fast secure connection, the second management node performs the association operation without the security context with the terminal node. In this case, the second management node needs to re-negotiate with the terminal node to determine a new security context, to establish association.

In another possible implementation of the first aspect, the second management node is a node that supports the fast connection establishment manner. The fast connection establishment manner is a manner in which association with the terminal node is established by using a secure communication parameter from another node, and the another node includes the first management node and/or the control node.

In some scenarios, because association may be directly established by using the secure communication parameter of the another node in fast connection establishment, the secure communication parameter may be used by a plurality of nodes. For a management node with a high security requirement or a management node connected to an external node, there may be a risk. In the foregoing implementation, the management node may be flexibly set to determine whether the management node can support fast connection establishment. Therefore, a node that supports the fast connection establishment manner may perform, based on the secure communication parameter provided by the another node, a communication connection that is with the security context with the terminal node, thereby enhancing personalized setting of the system, applicable to a system including a complex node network, and improving user experience.

Further, whether the second management node supports the fast connection establishment manner may be set by a user, may be determined by the second management node based on a security risk, or may be configured by the management node or the like. For example, the second management node reports one or more of a security requirement, a security capability, and the like of the second management node, and the control node evaluates whether the second management node meets a condition for supporting the fast connection establishment manner. When the second management node meets the condition for supporting fast connection establishment, the second management node forwards the secure communication parameter from the another node to the control node.

In another possible implementation of the first aspect, the method further includes: sending the secure communication parameter between the second management node and the terminal node to the control node. The secure communication parameter between the second management node and the terminal node is used to obtain the security context of the terminal node. In this way, when another management node, for example, the first management node or the third management node, needs to connect to the terminal node, the security context of the terminal node may be obtained by using the secure communication parameter between the second management node and the terminal node, thereby reducing signaling overheads and the connection establishment delay.

Optionally, when the second management node successfully establishes association, the secure communication parameter between the second management node and the terminal node is sent to the control node.

In another possible implementation of the first aspect, the method further includes: sending the parameter update information to the control node, where the parameter update information is used to update the secure communication parameter between the second management node and the terminal node.

According to a second aspect, an embodiment of this application provides a communication method, including: performing data transmission with a first management node, and when a connection establishment condition is met, performing an association operation with a second management node that has a security context, where the second management node has a security context of a terminal node.

The first management node has a security context of the terminal node.

The method may be applied to a terminal node. Optionally, the security context of the terminal node in the second management node is associated with the security parameter provided by the first management node to the second management node.

In this embodiment of this application, after the terminal node is connected to the first management node, the terminal node may be connected to the second management node in a connection manner with the security context. For example, the first management node may provide the security parameter for the second management node, so that the second management node can obtain the security context of the terminal node. The association operation may be performed without re-negotiating with the second management node to obtain the security context, so that signaling in an authentication process can be reduced, thereby reducing a signaling exchange delay. In addition, the terminal node and the second management node do not need to re-determine a secure communication parameter, negotiate a security context, or the like, so that calculation amounts of the terminal node and the second management node can be reduced, thereby further shortening a connection establishment delay.

Optionally, the method further includes: performing data transmission with the second management node.

In a possible implementation of the second aspect, the connection establishment condition includes: receiving a roaming request from the first management node, where the roaming request indicates the terminal node to perform connection handover.

In another possible implementation of the second aspect, the method further includes: measuring a distance between the first management node and the terminal node and a distance between the second management node and the terminal node, where the connection establishment condition includes: the distance between the second management node and the terminal node is less than the distance between the first management node and the terminal node.

It should be understood that the distance may also be replaced with another parameter related to communication quality. For example, the distance may be replaced with evaluation data such as communication efficiency, channel quality, communication stability, and a delay. The communication efficiency herein may include a data transmission rate. For example, the connection establishment condition further includes: Communication efficiency between the second management node and the terminal node is higher than communication efficiency between the first management node and the terminal node. Other cases may be deduced by analogy, and are not described herein one by one.

In another possible implementation of the second aspect, after performing the association operation with the second management node that has the security context, the method further includes: disconnecting data transmission with the first management node.

The foregoing describes a communication scenario. After associating with the second management node, the terminal node disconnects from the first management node. In other words, the terminal node roams from the first management node to the second management node.

In some scenarios, the terminal node may be connected to a plurality of nodes at the same time. When the terminal node is connected to a new management node, the method in this application is also applicable.

In another possible implementation of the second aspect, the method further includes: receiving handover indication information from the first management node, where the handover indication information includes information indicating the second management node.

In this implementation, the first management node may indicate the second management node to which the terminal node is connected, so that the terminal node is enabled to establish association with the second management node. In this way, operations such as calculation and evaluation can be centralized on the first management node side, so that the management node manages the terminal node more conveniently, and service quality of the management node is improved.

In another possible implementation of the second aspect, the second management node is a node that supports a fast connection establishment manner, the fast connection establishment manner is a manner in which association with the terminal node is established by using a secure communication parameter from another node, and the another node includes the first management node.

In another possible implementation of the second aspect, the security context of the terminal node includes an integrity protection key. Performing the association operation with the second management node by using the security context includes: sending first information to the second management node, receiving second information from the second management node, and checking integrity of the first information based on the integrity protection key; and when a check on the integrity of the first information succeeds, association is completed.

The integrity of the first information is protected by using the integrity protection key, the second information is used by the terminal node to establish association with the second management node, and the integrity of the second information is protected by using the integrity protection key.

In another possible implementation of the second aspect, the method further includes: when association fails, performing an association operation without the security context with the terminal node.

According to a third aspect, an embodiment of this application further provides a communication method. The method includes: performing data transmission with a terminal node, and sending a secure communication parameter between a second management node and the terminal node. The secure communication parameter is associated with the security context of the terminal node, and the secure communication parameter is used by the second management node to perform an association procedure that is with the security context with the terminal node.

Optionally, the method may be applied to a first management node, where the first management node has a security context of the terminal node, or the first management node has a secure communication parameter between the first management node and the terminal node.

In another possible implementation of the third aspect, the method further includes: sending parameter update information to the second management node, where the parameter update information is used to update a part of or all of parameters in the secure communication parameter.

In another possible implementation of the third aspect, the second management node is connected to a control node, and sending the secure communication parameter between the second management node and the terminal node includes: sending the secure communication parameter between the second management node and the terminal node to the control node, where the control node is configured to provide the secure communication parameter between the second management node and the terminal node for the second management node.

In another possible implementation of the third aspect, the second management node is connected to the control node, and sending the parameter update information to the second management node includes: sending the parameter update information to the control node, where the control node is configured to provide the parameter update information for the second management node.

In another possible implementation of the third aspect, the method further includes: sending handover indication information to the terminal node, where the handover indication information includes information indicating the second management node.

In another possible implementation of the third aspect, the method further includes: receiving third information from the control node, where the third information indicates a node that supports a fast connection establishment manner, the node that supports the fast connection establishment manner includes the second management node, and the fast connection establishment manner is a manner in which association with the terminal node is established by using a secure communication parameter from another node.

According to a fourth aspect, an embodiment of this application further provides a communication method. The method includes: receiving a secure communication parameter between a first management node and a terminal node from the first management node, and sending the secure communication parameter to a second management node. The secure communication parameter is associated with the security context of the terminal node, and the secure communication parameter is used by the second management node to perform an association procedure that is with the security context with the terminal node.

The method may be applied to a control node, and the control node is connected to the first management node and the second management node.

In a possible implementation of the fourth aspect, the method includes: receiving parameter update information from the first management node, and sending the parameter update information to the second management node. The parameter update information is used to update a part of or all of parameters in the secure communication parameter.

In a possible implementation of the fourth aspect, the method further includes: sending third information to the first management node, where the third information indicates a node that supports the fast connection establishment manner. The node that supports the fast connection establishment manner includes the second management node, and the fast connection establishment manner is a manner in which association with the terminal node is established by using a secure communication parameter from another node.

In a possible implementation of the fourth aspect, the method includes: determining, based on security requirements of a plurality of management nodes and/or trust degrees between the plurality of management nodes and the first management node, a node that supports the fast connection establishment manner in the plurality of nodes, where the plurality of management nodes are connected to the control node, and the plurality of management nodes include the second management node.

According to a fifth aspect, an embodiment of this application provides a communication apparatus. The communication apparatus includes a communication unit and a processing unit. The communication apparatus is configured to implement the method according to any one of the first aspect, or configured to implement the method according to any one of the second aspect, or configured to implement the method according to any one of the third aspect, or configured to implement the method according to any one of the fourth aspect.

According to a sixth aspect, an embodiment of this application provides a communication apparatus. The communication apparatus includes a processor. When the processor invokes a computer program or instructions in a memory, the method according to any one of the first aspect, the method according to any one of the second aspect, the method according to any one of the third aspect, or the method according to any one of the fourth aspect is implemented.

It should be noted that the processor described in the sixth aspect may be a processor (referred to as a dedicated processor for ease of differentiation) that is dedicated to performing these methods, or may be a processor, for example, a general-purpose processor, that executes these methods by invoking the computer program.

Optionally, the computer program may be stored in the memory. For example, the memory may be a non-transitory (non-transitory) memory, for example, a read-only memory (read-only memory, ROM). The memory may be integrated with the processor on a same component, or may be disposed on different components. A type of the memory and a manner of disposing the memory and the processor are not limited in this application.

In a possible implementation, the at least one memory is located outside the communication apparatus.

In another possible implementation, the at least one memory is located in the communication apparatus.

In another possible implementation, a part of memories of the at least one memory are located in the communication apparatus, and other memories are located outside the communication apparatus.

In this application, the processor and the memory may alternatively be integrated into one device, that is, the processor and the memory may alternatively be integrated.

According to a seventh aspect, an embodiment of this application provides a communication apparatus, including a logic circuit and an interface, where the logic circuit is coupled to the interface.

The interface is configured to input to-be-processed data, the logic circuit processes the to-be-processed data according to the method in any one of the first aspect to the fourth aspect, to obtain processed data, and the interface is configured to output the processed data.

According to an eighth aspect, an embodiment of this application provides a computer-readable storage medium, where the computer-readable storage medium is configured to store instructions or a computer program. When the instructions or the computer program are/is executed, the method according to any one of the first aspect, the method according to any one of the second aspect, the method according to any one of the third aspect, or the method according to any one of the fourth aspect is implemented.

According to a ninth aspect, an embodiment of this application provides a computer program product. When instructions or a computer program are/is executed, the method according to any one of the first aspect, the method according to any one of the second aspect, the method according to any one of the third aspect, or the method according to any one of the fourth aspect is implemented.

According to a tenth aspect, an embodiment of this application provides a terminal, where the terminal includes the communication apparatus according to any one of the fifth aspect to the seventh aspect. Further, the terminal may be an intelligent terminal or a vehicle such as a vehicle, a robot, an unmanned aerial vehicle, a ship, or a vessel. The vehicle is a vehicle in a broad sense, and may be a transportation vehicle (for example, a commercial vehicle, a passenger vehicle, a motorcycle, a flight vehicle, or a train), an industrial vehicle (for example, a forklift, a trailer, or a tractor), an engineering vehicle (for example, an excavator, a bulldozer, or a crane), an agricultural device (for example, a lawn mower or a harvester), or the like. For another example, the robot may be a robot such as an automated guided vehicle (automated guided vehicle, AGV), a walkable conversational robot, or a service robot.

According to an eleventh aspect, an embodiment of this application provides a communication system. The communication system includes a second management node, a first management node, and a terminal node.

The second management node is configured to implement the method according to any one of the first aspect; the terminal node is configured to implement the method according to any one of the second aspect; and the first management node is configured to implement the method according to any one of the third aspect.

Optionally, the communication system further includes a control node, and the control node is configured to implement the method according to any one of the fourth aspect.

### BRIEF DESCRIPTION OF DRAWINGS

The following briefly describes accompanying drawings used for describing embodiments.
FIG. 1 is a diagram of a communication scenario of a communication system according to an embodiment of this application;
FIG. 2A is a possible topology diagram of a communication system;
FIG. 2B is another possible topology diagram of a communication system;
FIG. 3 is a diagram of information included in a security context according to an embodiment of this application;
FIG. 4 is a diagram of a key system;
FIG. 5 is a diagram of an association procedure without a security context;
FIG. 6 is a diagram of an association procedure with a security context;
FIG. 7 is a schematic flowchart of a communication method according to an embodiment of this application;
FIG. 8 is a diagram of a GFN;
FIG. 9 is a schematic flowchart of another communication method according to an embodiment of this application;
FIG. 10A is a schematic flowchart of still another communication method according to an embodiment of this application;
FIG. 10B is a schematic flowchart of yet another communication method according to an embodiment of this application;
FIG. 11A is a schematic flowchart of still yet another communication method according to an embodiment of this application;
FIG. 11B is a schematic flowchart of further another communication method according to an embodiment of this application;
FIG. 12A is a schematic flowchart of further another communication method according to an embodiment of this application;
FIG. 12B is a schematic flowchart of further another communication method according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

The following describes embodiments of this application in detail with reference to accompanying drawings.

The following first describes a node. The node is a device having a communication capability, and includes but is not limited to one or more of user equipment, a network device, an industrial device, and the like. The user equipment includes but is not limited to a handheld terminal, a wearable terminal, a transportation means, a vehicle-mounted device, a sensing device, a smart home device, or a leisure and entertainment device. The handheld terminal includes but is not limited to a mobile phone, a tablet, and a notebook computer. The wearable device includes but is not limited to a headset, a smart band, a smartwatch, or smart glasses. The transportation means includes but is not limited to a vehicle, a ship, an aircraft, rail transport (like a subway and a high-speed railway), or a logistics robot (like an automated guided vehicle (automated guided vehicle, AGV)). The vehicle-mounted device includes but is not limited to a domain controller (domain controller, DC), a screen, a microphone, a speaker, an electronic key, keyless entry, a startup system controller, a battery management system (battery management system, BMS), a battery pack, or a cell. The sensing device includes but is not limited to a camera, a radar, a lidar, an illumination sensor, a temperature sensor, or a humidity sensor. The smart home device includes but is not limited to a projector, a smart television, a smart refrigerator, a smart home gateway, or a security device. The leisure and entertainment device is, for example, a virtual reality (virtual reality, VR) device, a mixed reality (Mixed Reality, MR) device, a massage chair, a home theater, a game control device, or a 4D cinema cabin.

The network device includes but is not limited to a router, a switch, or a base station. The industrial device is, for example, an industrial robot or a mechanical arm.

The node in embodiments of this application may be used in various scenarios such as intelligent vehicles, smart homes, intelligent terminals, smart manufacturing, or smart exhibition halls. In some application scenarios or some network types, a device having a similar communication capability may not be referred to as a node. However, for ease of description, devices having a communication capability are collectively referred to as nodes in embodiments of this application.

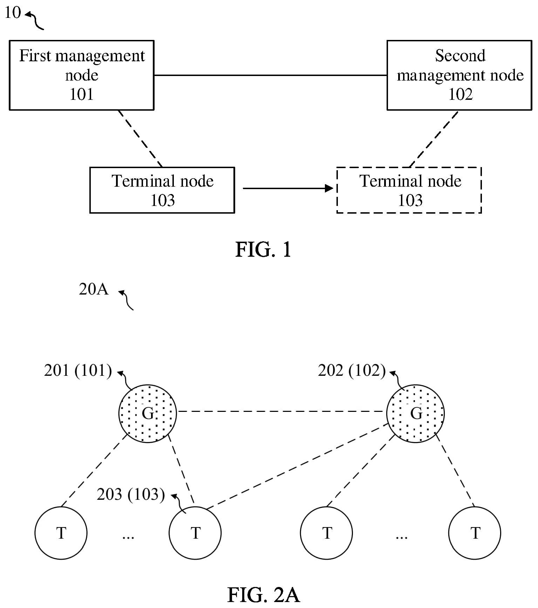

FIG. 1 is a diagram of a communication scenario of a communication system according to an embodiment of this application. A communication system 10 includes a management node and a terminal node. The management node is, for example, a first management node 101 and a second management node 102. The terminal node is, for example, a terminal node 103.

The management node is a node that has a communication capability and a management capability. The management capability may include a communication management capability, for example, connection management, resource scheduling, and information security-related management. For example, the management node is a node that can send scheduling information. In some scenarios, the management node may also be referred to as a G node, an access point (access point), or the like. It should be understood that the management node and the terminal node are example names given to distinguish communication nodes in a case of a communication connection. In a specific implementation process, a node may be a terminal node, or may be the management node. Even in some scenarios, a node may belong to two or more communication systems, and serve as the terminal node in some communication systems and as the management node in other communication systems.

The terminal node is a node having the communication capability, and may perform service transmission with the management node. In some scenarios, the terminal node may also be referred to as a T node. The terminal device may include user equipment (user equipment, UE), for example, an information sensing device such as bar code, radio frequency identification (radio frequency identification, RFID), a sensor, a global positioning system (global positioning system, GPS), or a laser scanner.

The first management node 101 may establish a communication connection to the terminal node 103 and perform service transmission. To ensure security, service transmission between the first management node 101 and the terminal node 103 is securely protected by using a key. Further, security may be improved by adding a fresh parameter or the like in a security protection process. Information such as the key, the fresh parameter, and a security algorithm used for security protection may form a security context and be stored in the first management node. Before performing service transmission, the first management node 101 needs to obtain a security context corresponding to the terminal node 103, so that information security of service transmission is ensured.

As communication proceeds, the terminal node 103 may have a requirement for establishing a communication connection to the second management node 102 in a plurality of scenarios, for example, in scenarios such as a roaming scenario, a scenario in which the terminal node is connected to a plurality of management nodes, a scenario in which the first management node is faulty, and a scenario in which the first management node actively exits a network (for example, node replacement or networking change). FIG. 1 shows a possible roaming scenario. The terminal node 103 may be movable. When the terminal node 103 is about to leave the first management node 101 and approach the second management node 102, the terminal node 103 may establish a connection to the second management node 102, and optionally disconnect a communication connection to the first management node 101.

To ensure security of data transmission between the terminal node 103 and the second management node 102, the terminal node 103 and the second management node 102 also need to first determine a key, a fresh parameter, and the like, and authenticate each other's identity. The first management node 101 may provide a security communication parameter between the first management node 101 and the terminal node for another node. The security communication parameter may include a security context that is corresponding to the terminal node and that is determined by the first management node 101, may include some information in the security context, or may include a parameter that can be used to determine the security context. In conclusion, the second management node may obtain the security context of the terminal node based on the security communication parameter. In this way, the second management node can implement an association operation with the security context, to establish a connection for service transmission.

In some possible cases, if the second management node 102 does not have the security context of the terminal node 103, when the terminal node 103 and the second management node 102 establish a connection, the terminal node 103 and the second management node 102 need to perform key negotiation through signaling exchange to determine the key, the fresh parameter, and the like, and authenticate each other's identity. Because key negotiation requires a plurality of times of signaling exchange and has a requirement for privacy, the terminal node 103 and the second management node 102 need to send and receive a plurality of pieces of signaling for authentication. As a result, efficiency of establishing a communication connection between the terminal node 103 and the second management node 102 is low, and a delay is high.

However, in this embodiment of this application, the second management node 102 may obtain the security context of the terminal node 103 in advance before association, so that the second management node 102 can perform an association operation having the security context with the terminal node 103. The association operation may be performed without re-negotiating with the terminal node 103 to obtain the security context, so that signaling in an authentication process can be reduced, thereby reducing a signaling exchange delay. In addition, the security context does not need to be re-negotiated, so that a calculation amount can be reduced, thereby further reducing the signaling exchange delay.

In addition, the second management node 102 and the first management node 101 may be communicatively connected, where the communication connection herein includes a direct connection, a connection through an intermediate node (for example, a control node), and the like.

Optionally, in the solution shown in FIG. 1, a connection between any two nodes may be wired, wireless, or a combination thereof. For example, the first management node 101 and the second management node 102 are connected (including being directly connected and indirectly connected) by using a wired communication technology, and the connection is represented by using a solid line in FIG. 1. The management node and the terminal are connected by using a wireless communication technology, and the connection is represented by using a dashed line in FIG. 1.

The communication method, the communication apparatus, the communication system, the node, and the like in embodiments of this application are applicable to a plurality of networks, for example, are applicable to a wired communication network, a wireless communication network, or a network of a combination of wired communication and wireless communication. For example, the wireless communication network includes a network connected by using the following communication technologies: SparkLink (SparkLink), 802.11b/g, Bluetooth (Bluetooth), Zigbee (Zigbee), a radio frequency identification (radio frequency identification, RFID) technology, an ultra-wideband (ultra-wideband, UWB) technology, or a wireless short-range communication system (for example, an in-vehicle wireless short-range communication system), or a long-range connection technology, including a communication technology based on long term evolution (Long Term Evolution, long term evolution), a 5th generation mobile communication technology (5th generation mobile networks or 5th generation wireless systems, 5th-Generation, 5G or 5G technology for short), a global system for mobile communications (global system for mobile communications, GSM), a general packet radio service (general packet radio service, GPRS), a universal mobile telecommunications system (universal mobile telecommunications system, UMTS), or another wireless access technology. For another example, the wired communication network includes a network connected by using the following communication technologies: one or more of an optical fiber connection technology, an in-vehicle wired communication technology, a controller area network (Controller Area Network, CAN), a local interconnect network (Local Interconnect Network, LIN), a CAN flexible data rate (CAN Flexible Data-Rate, CAN FD), or an automotive Ethernet.

In a possible example, FIG. 2A shows a possible topology diagram of a communication system. A communication system 20A includes a T node and a G node. The G node manages a specific quantity of T nodes, and the G node is connected to these T nodes to jointly complete a communication function. In a process in which the T node is associated with the G nodes, the G nodes may obtain a security context of the T node. For example, a G node 201 may be considered as the first management node 101, and may establish a connection to a T node 203 (which may be considered as the terminal node 103). The G node 201 may store a security context of the T node 203. However, the G node 201 may provide a secure communication parameter for another G node, for example, a G node 202 (which may be considered as the second management node 102), and the secure communication parameter may be used by the G node 202 to obtain the security context of the T node 203. When the T node 203 needs to access the G node 202, the G node 202 may perform an access procedure that is with a security context with the T node 203.

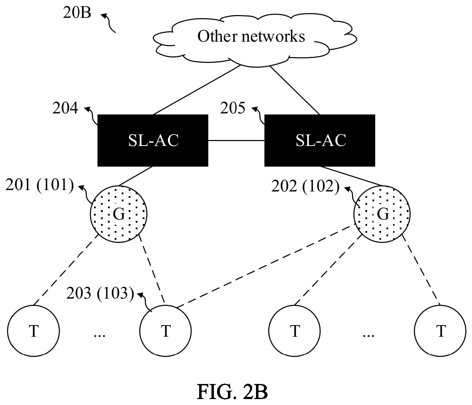

Optionally, a connection between the G node 201 and the G node 202 may be a wireless connection (a dashed line shown in FIG. 2A), may be a wired connection, or may be a combination of wired and wireless connections. In another possible example, FIG. 2B shows a possible topology diagram of a communication system. A communication system 20B includes a T node, a G node, and a sparklink access controller (sparklink-access controller, SL-AC). For related descriptions of the G node and the T node, refer to the foregoing descriptions. In FIG. 2B, a G node 201 may provide a secure communication parameter for an SL-AC node 204, and the secure communication parameter may be used to obtain a security context of a T node 203 associated with the G node 201. With reference to FIG. 2B, the SL-AC node 204 may be connected to one or more G nodes, and a plurality of SL-AC nodes may also be connected to each other. The SL-AC node 204 may forward the secure communication parameter provided by the G node 201 for the SL-AC node 204 to another G node connected to the SL-AC node 204 or forward the secure communication parameter to another SL-AC node, for example, an SL-AC node 205. In the latter case, the SL-AC node 205 may forward the secure communication parameter to a G node connected to the SL-AC node 205, for example, a G node 202. In this way, the G node 202 may receive the secure communication parameter from another G node, for example, the G node 201, to obtain a security context of a T node connected to the another node. For example, when a T node 203 needs to access the G node 202, the G node 202 may perform an access procedure that is with a security context with the T node 203.

Optionally, the SL-AC node may be further connected to another network, where the another network herein includes but is not limited to the Internet (Internet), another network of a same type, or the like.

The security context is mentioned for a plurality of times above. Herein, the security context is first described.

The security context is a group of information including a parameter related to communication security, for example, including one or more of a key, a fresh parameter, a key negotiation parameter, information about a security algorithm, an identity of the terminal, and the like. The information about the security algorithm includes one or more of indication information of the security algorithm, a version of the security algorithm, and the like.

The following describes the parameter in the security context. The key may include one or more of a shared key, a session key, and the like. The shared key is a key pre-shared with the terminal node. Optionally, when the security context includes the shared key, the security context further includes an identifier of the shared key and a validity period of the shared key. The identifier of the shared key is used to distinguish different shared keys. A session key is a key used to perform security protection on a communication session, and includes one or more of an encryption key, an integrity protection key, an authentication encryption key, and the like. Further, the encryption key may include a user plane encryption key, a signaling plane encryption key, and the like. Alternatively, the encryption key may further include a unicast encryption key, a multicast encryption key, or the like. Similarly, the integrity protection key may include a user plane integrity protection key, a signaling plane integrity protection key, or the like, and/or the integrity protection key may include a unicast integrity protection key, a multicast integrity protection key. The authentication encryption key may also include the foregoing keys of the subdivided types, which are not described one by one herein.

Further, when the security context includes the key, the security context may further include information about the key, where the information about the key includes one or more of an identifier of the key, a validity period of the key, start time of the key, and the like. For example, the security context includes a shared key, an ID of the shared key, and a validity period of the shared key. Certainly, when there are a plurality of keys, this application does not limit that information about each key exists in a security context. For example, the security context may include an integrity protection key, but may not include a validity period of the integrity protection key. After the shared key expires and is updated, a node derives a new integrity protection key based on the updated shared key and adds the new integrity protection key to the security context. In this case, an old integrity protection key may no longer be used.

The fresh parameter is a parameter used in a security field, and is used to obtain a key or participate in a security protection process, thereby improving security. The fresh parameter is typically updated after use to improve security. The fresh parameter includes but is not limited to a counter value, a random number, a frame number, and the like. In some scenarios, NONCE is also commonly used as the fresh parameter. For example, the first fresh parameter and the second fresh parameter mentioned in some embodiments of this application are example fresh parameters. In some solutions, the first fresh parameter is used to derive the session key. For example, the secure communication parameter includes the shared key, and the session key may be derived based on the first fresh parameter and the shared key. Certainly, another parameter may also be used for key derivation, and is not listed one by one herein. For example, the first fresh parameter may include a counter (counter) value, and the counter value is updated each time after being used. For example, the counter value is increased by 1 each time after being used. The second fresh parameter is used as a parameter used for security protection. The second fresh parameter is used as an input of a cryptographic algorithm used for communication encryption. For example, when transmitted information is encrypted/decrypted by using the security context, the second fresh parameter may be used to improve security.

The key negotiation parameter refers to an input of a key negotiation algorithm used in key negotiation.

The security algorithm refers to an algorithm related to security protection, for example, one or more of a key negotiation algorithm, an encryption algorithm, an integrity protection algorithm, an authentication encryption algorithm, a digest algorithm, and a key derivation algorithm. The indication information of the security algorithm refers to information that can indicate one or more security algorithms. The encryption algorithm is used as an example. Table 1 shows a possible encryption algorithm identifier. The encryption algorithm is indicated by two bits of binary data. When the identifier is 00, an encryption algorithm 1 is indicated. When the identifier is 01, an encryption algorithm 2 is indicated. Other cases are similar. The encryption algorithms 1 to 4 are used to represent encryption algorithms. In a specific implementation process, algorithms represented by the encryption algorithms 1 to 4 may be designed based on a requirement. This is also similar to the integrity protection algorithm and the authentication encryption algorithm.

**Table 1 Identifier of an encryption algorithm**

| Identifier | Indicated encryption algorithm |
|---|---|
| 00 | Encryption algorithm 1 |
| 01 | Encryption algorithm 2 |
| 10 | Encryption algorithm 3 |
| 11 | Encryption algorithm 4 |

An identity of the terminal node is used to identify an identity of the terminal, and different terminals can be easily distinguished by using the identity. The identity herein may be temporary or fixed. The temporary identity of the terminal node may be updated to improve security.

For example, the security context of the node of the terminal stored in the management node may include one or more of the following parameters: a shared key, a first fresh parameter, a session key, an identifier of a security algorithm, a first identity of the terminal node, a second fresh parameter, and the like. Optionally, when the security context includes the shared key, the security context may further include an identifier of the shared key and a validity period of the shared key. It should be understood that there may be a plurality of shared keys, first fresh parameters, session keys, security algorithms, and second fresh parameters, and the used scenarios may also be different. For example, different session keys may be used in different communication manners. For example, the session key may include a unicast session key, a multicast session key (for example, a group encryption key or a group integrity protection key), a broadcast session key, and the like. The security algorithm may include a unicast security algorithm, a multicast security algorithm, a broadcast security algorithm, and the like. The second fresh parameter includes a second fresh parameter used for unicast, a second fresh parameter used for multicast, and the like. Other cases are not described in detail.

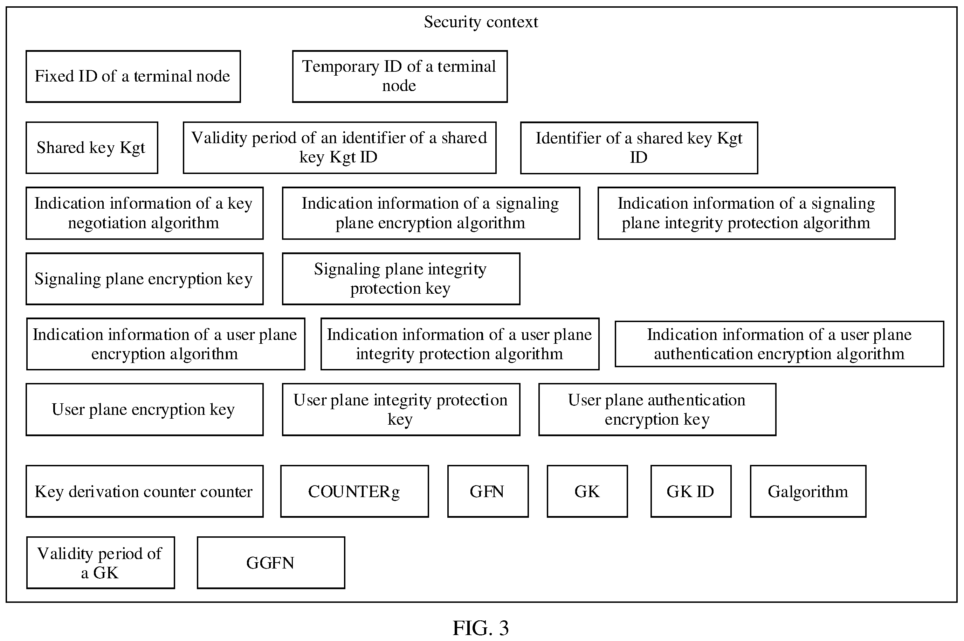

FIG. 3 is a diagram of information included in a security context according to an embodiment of this application. The security context is a security context that is of a terminal node and that is obtained by a management node, and includes: a fixed ID of the terminal node, a temporary ID of the terminal node, a shared key (for example, represented as Kgt), a validity period of the shared key, an identifier (for example, Kgt ID) of the shared key, indication information of a key negotiation algorithm, indication information of a signaling plane encryption algorithm, indication information of a signaling plane integrity protection algorithm, a signaling plane encryption key, a signaling plane integrity protection key, indication information of a user plane encryption algorithm, indication information of a user plane integrity protection algorithm, indication information of a user plane authentication encryption algorithm, a user plane encryption key, a user plane integrity protection key, a user plane authentication encryption key, a key derivation counter counter, COUNTERg, a global frame number (global frame number, GFN), a group key (for example, represented as GK), an identifier (GK ID) of the GK, a group algorithm (Galgorithm), a validity period of the group key (GK expiration), and a group global frame number (group global frame number, GGFN).

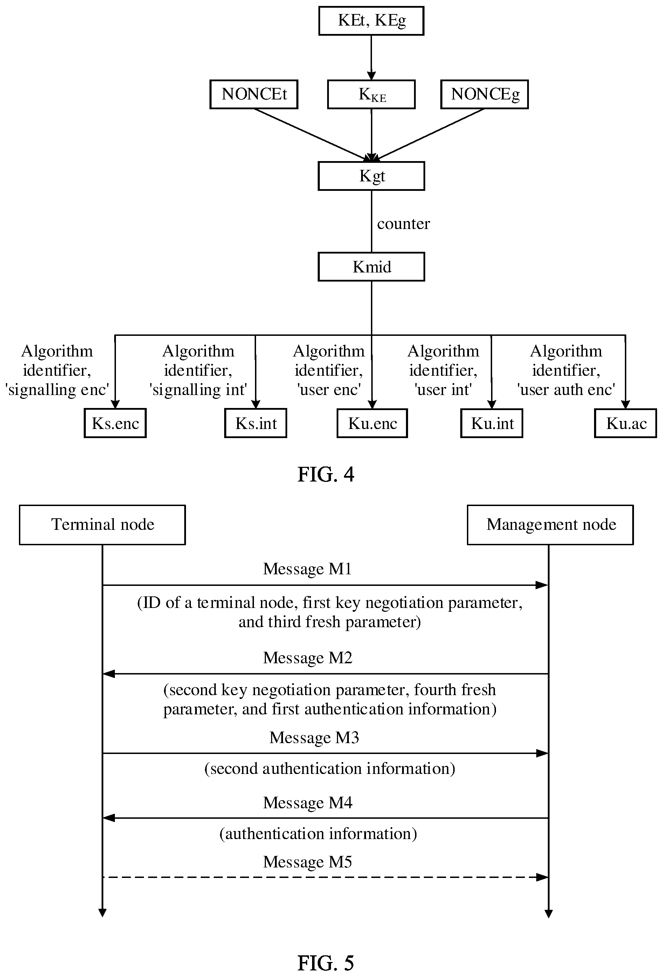

In some possible implementations, parameters in the security context are associated with each other. For example, the encryption key and the integrity protection key may be obtained by using the shared key. For example, FIG. 4 is a diagram of a key system. KEt and KEg are key negotiation parameters exchanged by two communication ends during key negotiation, and are respectively referred to as a first key negotiation parameter (that is, KEt) and a second key negotiation parameter (KEg) in some solutions. For example, a key is negotiated between a G node and a T node. KEt is a parameter provided by the T node, and KEg is a parameter provided by the G node. The two communication ends may obtain a key K_{KE} through negotiation by using the first key negotiation parameter and the second key negotiation parameter. Further, the shared key, for example, a shared key kgt, may be obtained based on the key K_{KE}. For example, the shared key is obtained by using the key K_{KE} and a fresh parameter. The fresh parameter is, for example, a third fresh parameter NONCEt and a fourth fresh parameter NONCEg. Similarly, NONCEt may be a parameter provided by the T node, and NONCEg may be a parameter provided by the G node.

In addition, it should be noted that although kgt is referred to as the shared key in some embodiments of this application, as explained above, the shared key is a key shared with another node. Therefore, in some scenarios, the key K_{KE}, Kmid, a signaling plane encryption key Ks.enc, a signaling plane integrity protection key Ks.int, a user plane encryption key Ku.enc, a user plane integrity protection key Ku.int, a user plane encryption key Ku.ac, or the like shown in FIG. 4 may also be used as the shared key.

In some possible implementations, a session key may be obtained based on the shared key (for example, kgt, K_{KE}, or Kmid). As shown in FIG. 4, the key Kmid may be derived based on the shared key kgt and a counter counter. The counter counter is considered as a fresh parameter, and is updated after Kmid is obtained, so that different keys Kmid may be derived for a plurality of times based on the shared key and the counter. Further, a plurality of session keys may be obtained based on the key Kmid and an algorithm identifier. For example, the signaling plane encryption key Ks.enc may be obtained based on the key Kmid and an algorithm identifier "signalling enc". For another example, the signaling plane encryption key Ku.int may be obtained based on the key Kmid and an algorithm identifier "signalling int". Certainly, the keys Kmid used in the two examples may be different. For other keys, refer to FIG. 4. Details are not described herein.

The following describes an example of an association procedure. Specifically, association refers to a process in which two nodes obtain a consistent communication key and establish a connection. In some scenarios, association between a terminal node and a management node may also be referred to as access of the terminal node to the management node.

FIG. 5 is a diagram of an association procedure without a security context. The association procedure includes an authentication procedure and a security context procedure. For ease of differentiation, messages (or referred to as information) exchanged in the association procedure are respectively represented as M1 to M5 below. Before the association procedure, a terminal node and a management node do not have a security context, do not obtain a session key through negotiation, and have no security context. During association, the terminal node sends the message M1, where the message M1 includes a terminal node ID, a first key negotiation parameter, and a third fresh parameter. The management node determines a second key negotiation parameter and a fourth fresh parameter, and determines a first key based on the first key negotiation parameter and a second key negotiation parameter. Further, the management node may determine a second key (for example, a key Kgt) based on the first key (for example, a key K_{KE}), the third fresh parameter, and the fourth fresh parameter. Optionally, the management node may derive a session key based on the second key (or the first key), to perform security protection on the message. The management node provides the second key negotiation parameter and the fourth fresh parameter for the terminal node by using the message M2. Optionally, the message M2 carries authentication information (that is, first authentication information), to verify a key, an identity, or message integrity.

The terminal node obtains a first key or a second key in a same manner. Further, the terminal node also derives a session key based on the second key (or the first key), to perform security protection on a subsequent message. In this way, the terminal node and the management node negotiate to obtain a consistent key. The terminal node may further generate second authentication information, add the second authentication information to the message M3, and send the message M3 to the management node. The management node verifies the second authentication information. If verification succeeds, the management node sends the message M4 to the terminal node, to complete association. Optionally, the terminal node responds by using the message M5, to indicate that association is completed.

It should be understood that, in a specific implementation process, more messages may be exchanged in the association procedure, or more or fewer parameters may be carried in the messages. For example, the third fresh parameter and the fourth fresh parameter may not be carried, and the second key may be obtained based on the first key and a counter. For another example, the first authentication information or the second authentication information may not be carried. For another example, the message M1 may optionally further carry one or more of a security capability of the terminal node (used to indicate a security algorithm supported by the terminal node), indication information of a key negotiation algorithm, and the like. For another example, the message M2 may further carry a length of the authentication information, a length of the session key, an ID of the second key (or an ID of the first key), and indication information of a security algorithm. For another example, the message M4 may further carry one or more of a temporary ID allocated by the terminal node to the management node, a validity period of the second key, a validity period of the first key, and the like. When the terminal node belongs to a communication group, the management node may further add one or more of a group key of the communication group, an ID of the group key, a group security algorithm, a validity period of the group key, and the like to the message M4.

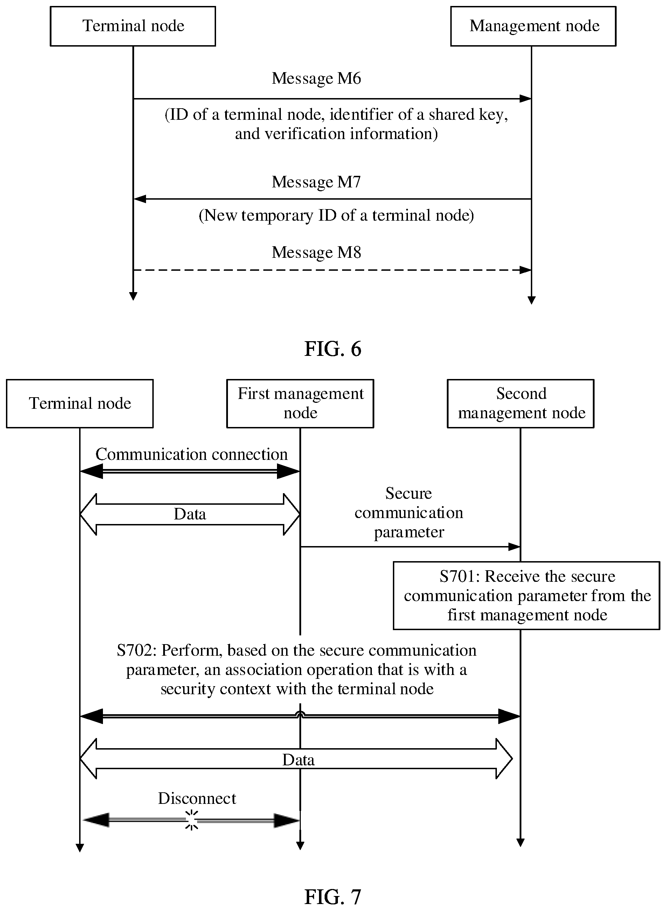

FIG. 6 is a diagram of an association procedure with a security context. For ease of differentiation, messages (or information) are respectively represented as M6 to M8 below. Before the association procedure, a management node obtains a security context of a terminal node. For content of the association context, refer to the foregoing description, for example, FIG. 3. During association, the terminal node sends the message M6 to the management node, where the message M6 carries an identity of the terminal node (which may be a temporary identity or a fixed identity), for example, an ID of the terminal node shown in FIG. 6. Optionally, the message M6 may further carry an identifier of a shared key, for example, a Kgt ID. Optionally, integrity of the message M6 may be protected by using an integrity protection key. The following uses an example in which the integrity of the message M6 is protected for description. When the integrity of the message M6 is not protected, a step of checking the integrity may be skipped subsequently. Integrity protection may be implemented by generating verification information of message content in the message M6. The verification information may be carried in the message M6, and is used to verify integrity of a part of or all of the message content in the message M6.

The management node obtains, based on the identity of the terminal node, an integrity protection key shared with the terminal node, and checks the integrity of the message M6 based on the integrity protection key. When the management node successfully checks the integrity of the message M6, the management node sends the message M7, and establishes the association between the management node and the terminal node. Optionally, when the management node successfully checks the integrity of the message M6, the management node may further allocate a temporary ID to the terminal node. In this case, the message M7 may carry a new temporary ID allocated by the management node to the terminal node.

It may be understood that the integrity protection key may be included in the security context, and "checking the integrity of the association message based on the integrity protection key" may also be replaced with "checking the integrity of the association message based on the security context". Further, the security context may include indication information of an integrity protection algorithm and an integrity protection key. The management node may check the integrity of the message M6 by using the integrity protection key and a specified integrity protection algorithm. Optionally, the integrity protection key herein may be an integrity protection algorithm of a signaling plane.

Further, the management node protects integrity of the message M7 by using the signaling plane integrity protection algorithm and the signaling plane integrity protection key Ks.int. Optionally, when signaling plane encryption protection is enabled, the management node may further protect the integrity of the message M7 by using a signaling plane encryption algorithm and a signaling plane encryption key Ks.enc.

Optionally, the terminal node responds by using the message M8, to indicate that association is completed. In some scenarios, if the message M7 is encrypted, the terminal node decrypts the message M7. If the integrity of the message M7 is protected, the terminal node verifies the integrity of the message M7. If integrity verification succeeds, association is completed, and the terminal node may send the message M8 to the management node.

The following describes a method provided in embodiments of this application.

FIG. 7 is a schematic flowchart of a communication method according to an embodiment of this application. Optionally, the method may be implemented based on the communication system described in one or more embodiments such as FIG. 1, FIG. 2A, or FIG. 2B. The communication method shown in FIG. 7 may include step S701 and/or step S702. It should be understood that, for ease of description, descriptions are provided in a sequence of S701 and S702, but this is not intended to limit that the steps are definitely performed in the foregoing sequence. An execution sequence, execution time, a quantity of execution times, and the like of the foregoing one or more steps are not limited in embodiments of this application. S701 and step S702 are specifically as follows.

Step S701: A second management node receives a secure communication parameter from a first management node.

The secure communication parameter includes a parameter used when the first management node communicates with the terminal node, and includes at least one of a key, a fresh parameter, information about a security algorithm, and a key negotiation parameter. Further, the secure communication parameter includes information about the key, information about the fresh parameter, and the like. The key includes but is not limited to a shared key and a session key, and the information about the key includes but is not limited to an identifier of the key, a validity period of the key, and the like. The information about the security algorithm includes an identifier of the security algorithm, and the like.

In a possible implementation, the secure communication parameter includes a security context of the terminal node, or the secure communication parameter is the security context of the terminal node. Specifically, the first management node has established a connection to the terminal, and the first management node has the security context of the terminal node associated with the first management node. The first management node may directly or indirectly provide the security context to another node, for example, the second management node.

In another possible implementation, the secure communication parameter includes the key. The key may be used to derive a session key, or the key may be directly used as the session key for security protection in a communication process. In this case, it may be considered that the secure communication parameter does not directly include all of parameters in the security context of the terminal node, but includes only a part of the parameters, or it may be considered that the second management node may obtain a part of or all of the parameters in the security context of the terminal node based on the secure communication parameter.

For example, the secure communication parameter may include the shared key, the identifier of the shared key, the validity period of the shared key, and the like. For another example, the secure communication parameter may include the fresh parameter, for example, one or more of a first fresh parameter, a second fresh parameter, a fresh parameter NONCEg, and the like. For another example, the secure communication parameter may include the indication information of the security algorithm, for example, indication information of a user plane encryption algorithm or indication information of a user plane integrity protection algorithm. For another example, the secure communication parameter may include an identity of the terminal.

In some scenarios, the first management node may directly or indirectly provide the secure communication parameter for the second management node. A manner in which the secure communication parameter is provided for the second management node usually depends on a connection relationship between the first management node and the second management node, and is further related to whether the first management node and the second management node can sense each other. The following describes several possible connection relationships between the second management node and the first management node.

Connection relationship 1: The first management node and the second management node are separately connected to a control node. The first management node sends the secure communication parameter to the control node, and the secure communication parameter is forwarded by the control node and then received by the second management node. For details, refer to FIG. 2B. It should be noted that a quantity of control nodes is not limited herein. For example, in the architecture shown in FIG. 2B, when the G node 201 provides the secure communication parameter for the G node 202, the secure communication parameter may be forwarded by two SL-AC nodes.

Optionally, when the first management node is not directly connected to the second management node, the first management node may sense the second management node, or may not sense the second management node. Sensing the second management node is to obtain related information of the second management node, for example, a communication group in which the second management node is located, an ID of the second management node, or a communication address of the second management node. When providing the secure communication parameter, if the first management node senses the second management node, the first management node may specify that the secure communication parameter is sent to the second management node or the communication group in which the second management node is located. In this case, the secure communication parameter or a message carrying the secure communication parameter may include the related information of the second management node.

Optionally, the second management node for which the security parameter is provided may meet some conditions. In other words, the control node may not provide the security parameter for all connected (or sensed) management nodes. The following lists some possible conditions that can be met by a management node that can be provided with the security parameter.

Condition 1: The second management node and the first management node belong to a same communication group, and the communication group includes a plurality of management nodes, and further includes one or more types of nodes such as the control node or the terminal node. Nodes in the communication group trust each other, or in other words, only a node on which trust verification (or identity verification) succeeds can join the communication group. The nodes (or management nodes) in a same communication group may provide a secure communication parameter for each other. Further, the communication group may be further divided into a plurality of small groups, and different small groups are distinguished from each other by using small group identifiers. In other words, nodes having a same small group identifier are located in a same small group. Management nodes in a same communication group or a same small group may provide a secure communication parameter for each other. The nodes (or the management nodes) in the same small group may provide the secure communication parameter for each other.

For example, the second management node and the first management node belong to a same extended service set (extended service set, ESS). Further, the first management node and the second management node have a same service set identifier (service set identifier, SSID). In other words, the first management node may provide the secure communication parameter for a management node that has a same SSID in a same ESS.

Optionally, the first management node herein may also be replaced with the control node, that is, the second management node and the control node belong to a same communication group, or the second management node and the control node belong to a same small group.

Condition 2: A secure communication channel is established between the control node and the second management node. For example, the control node and the second management node are connected through wired communication, or there is a secure channel between the control node and the second management node. For example, the secure channel includes but is not limited to a transmission channel based on one or more of the following protocols: secure sockets layer (Secure Sockets Layer, SSL), hypertext transfer protocol secure (hypertext transfer protocol secure, HTTPS), transport layer security (Transport Layer Security, TLS), datagram transport layer security (datagram transport layer security, DTLS), and the like.

Condition 3: The second management node supports fast connection establishment. Fast connection establishment, or referred to as fast association, refers to that a connection can be established with the terminal node based on a secure communication parameter provided by another node. For example, because association may be directly established by using the secure communication parameter of the another node in fast connection establishment, the secure communication parameter may be used by a plurality of nodes. For a management node with a high security requirement or a management node connected to an external node, there may be a risk. Therefore, the management node may preset security requirement information. The security requirement information indicates that the management node can perform a fast connection based on a secure communication parameter of another management node (or a secure communication parameter received from a management node with a security level).

Further, whether the second management node supports a fast connection establishment manner may be set by a user, may be determined by the second management node based on a security risk, or may be configured by the management node or the like. For example, the second management node reports one or more of a security requirement, a security capability, and the like of the second management node, and the control node evaluates whether the second management node meets a condition for supporting the fast connection establishment manner. When the second management node meets the condition for supporting fast connection establishment, the control node forwards a secure communication parameter from another node to the second management node.

Condition 4: The second management node is a management node to which the terminal node is to be connected. For example, the terminal node selects or is specified with the to-be-connected second management node. The first management node or the control node may obtain indication information about the second management node, and provide the secure communication parameter for the second management node.

It should be understood that the foregoing conditions are merely examples of conditions, and in a specific implementation process, there may be more or fewer conditions, and a plurality of conditions may be further combined. In an example of the combination, the first management node may provide the secure communication parameter for a management node having a same SSID in a same ESS, and the node for which the secure communication parameter is provided supports fast connection establishment.

The foregoing is related content in the first connection relationship. The following continues to describe a second example of a connection relationship.

Connection relationship 2: The first management node is directly connected to the second management node. The first management node sends the secure communication parameter to the second management node. Correspondingly, the second management node receives the secure communication parameter from the first management node. For an architecture, refer to FIG. 2A.

Similarly, the first management node may not provide the secure communication parameter for all connected management nodes. In this case, the second management node may be a node that is in a same communication group or communication small group as the first management node, a secure communication channel is established between the second management node and the first management node, or the second management node supports establishment of association based on the secure communication parameter of the first management node. For specific descriptions, refer to related descriptions of the foregoing condition 1 to condition 4. Details are not described herein again.

Certainly, the foregoing two cases are two example connection cases. In a specific implementation process, there may be other association between the first management node and the second management node. Details are not described herein.

In some solutions, the secure communication parameter may be sent through a secure channel. For example, a communication tunnel is established between two ends that transmit the secure communication parameter, or the two ends that transmit the secure communication parameter are authenticated, to ensure security in a transmission process of the secure communication parameter.

In a possible implementation, the secure communication parameter is transmitted by using a packet that meets a control and provisioning of wireless access points protocol specification (control and provisioning of wireless access points protocol specification, CAPWAP). The CAPWAP is an application layer protocol based on a user datagram protocol (user datagram protocol, UDP) port. A packet transmitted by using the CAPWAP protocol may be protected by using a DTLS protocol, and a transmission channel that complies with the CAPWAP protocol may also be referred to as a CAPWAP tunnel.

For example, with reference to the architecture in FIG. 2B and the connection relationship 1 used as an example, a CAPWAP tunnel is established between the first management node and an SL-AC, a CAPWAP tunnel is established between SL-ACs, and a CAPWAP tunnel is established between the SL-AC and the second management node. For example, the security parameter is the security context of the terminal node. The first management node provides, by using the CAPWAP tunnel, the security context of the terminal node (optionally, currently associated and/or previously associated) associated with the first management node for the SL-AC, and the SL-ACs also transmit the security context through the CAPWAP tunnel. Further, the SL-AC may provide the security context of the terminal node for the second management node through the CAPWAP tunnel.

In a possible implementation, there may be a plurality of possible designs for an occasion or a condition of sending the secure communication parameter by the first management node.

For example, after establishing association with the terminal node, the first management node may synchronize the secure communication parameter to another node (for example, the second management node or the control node). For another example, after establishing association, the first management node sends the secure communication parameter to the another node when a subsequent condition is triggered.

For example, after establishing association with the terminal node, the first management node may synchronize the secure communication parameter to the another node (for example, the second management node or the control node). For another example, the first management node provides the secure communication parameter for the another node under a trigger condition. The trigger condition herein includes but is not limited to: The terminal node has a requirement for establishing a connection to the another management node (for example, in a roaming scenario), a networking relationship changes based on adjustment and control, the first management node exits a network (for example, node replacement), or the like.

Optionally, the first management node establishes association with the terminal node, and when a first condition is met, the first management node provides the secure communication parameter for the another node. For example, the following describes several possible conditions.

Condition 1: When triggering connection handover, the first management node provides the secure communication parameter for the another node. Specifically, if the terminal node has a requirement for establishing a connection to the another management node (for example, in the roaming scenario), connection handover is triggered. For example, the first management node delivers a connection handover instruction to the terminal node to trigger connection handover, and the connection handover instruction indicates the terminal node to connect to a new management node. The connection handover instruction may include the indication information of the second management node, so that the terminal node is associated with the second management node. For another example, the terminal node measures a distance from the management node, and the distance between the terminal node and the second management node is less than a distance between the terminal node and the first management node. The terminal node sends a measurement result or related information of the second management node to the first management node, to trigger connection handover.

Condition 2: When the first management node is overloaded, the first management node provides the secure communication parameter for the another node.

Condition 3: The first management node receives indication information from the terminal node, where the indication information indicates that the terminal node needs to establish a connection to the second management node.

Condition 4: The first management node receives control information from the control node, where the control information indicates the first management node to provide the secure communication parameter for the another node.

Optionally, these conditions may be separately used as the first condition, or may be combined as the first condition. In addition, the conditions herein may be further combined with the conditions of the management node for which the secure communication parameter can be provided in the foregoing connection relationships. Details are not described herein.

In some possible implementations, the secure communication parameter is associated with the security context of the terminal node. Association herein means that the secure communication parameter directly or indirectly affects a part of or all of parameters in the security context of the terminal node. The following describes, by using an example, possible implementations of association between the secure communication parameter and the security context of the terminal node.

Implementation 1: The secure communication parameter includes the security context of the terminal node, and the second management node may directly use the secure communication parameter as the security context of the terminal node. For example, the first management node provides all of the parameters in the security context of the terminal node, or all necessary parameters (that is, parameters except optional parameters). The first management node establishes the security context of the terminal node based on the secure communication parameter. It should be understood that the security context herein may be considered as an initial security context, and may be further updated subsequently, for example, a parameter is added to the security context, a parameter is deleted from the security context, or a parameter in the security context is updated.

Implementation 2: The secure communication parameter provided by the first management node includes only a part of parameters in the security context. The second management node may determine the security context by itself, but use the secure communication parameter in a process of determining the security context. In this case, the part of parameters in the security context may be determined by the second management node.

In a possible example, the secure communication parameter includes a shared key, an ID of the shared key, a first fresh parameter, a first identity of the terminal node, and indication information of a security algorithm. The second management node determines the security context of the terminal node, where the security context may include a parameter in the secure communication parameter. Further, the second management node may determine a session key based on the shared key and the first fresh parameter, and the security context may further include the session key.

For example, the second management node determines the second fresh parameter. The second management node may determine a first number based on a number of a protocol data unit PDU from the terminal node, and determine a second fresh parameter based on a second number and the first number. The security context includes the second fresh parameter. An initial value of the second number is predetermined, and the second number is updated when the first number is reversed.

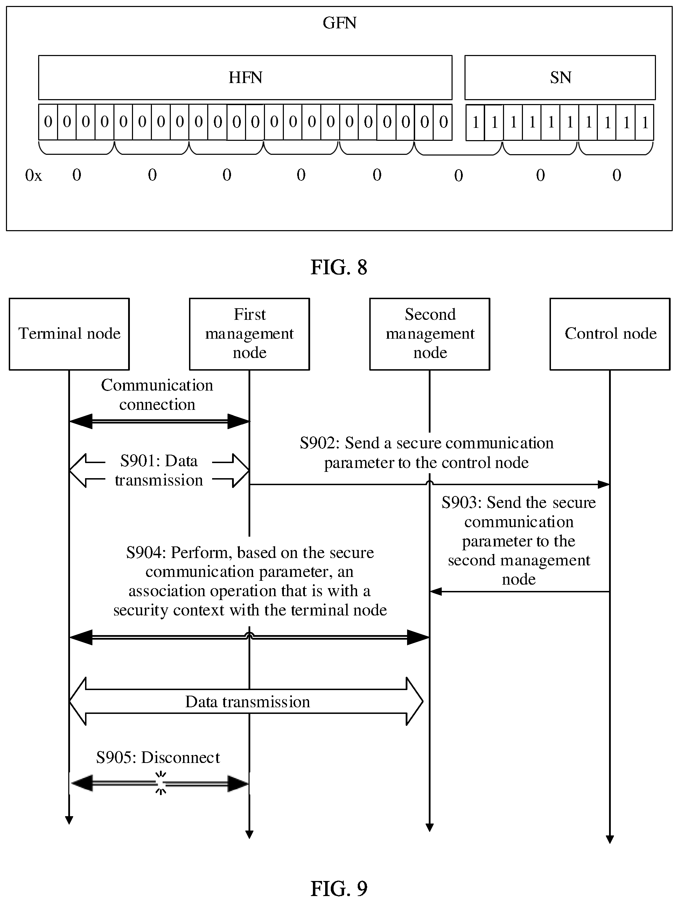

For example, the second fresh parameter includes a GFN, and FIG. 8 is a diagram of the GFN. The GFN includes an HFN and an SN. The SN is the same as the number of the protocol data unit, and the HFN may be determined by the second management node, for example, set to 0. Alternatively, the second management node may use an HFN in the secure communication parameter as the HFN.

Optionally, the protocol data unit PDU from the terminal node may be, for example, a PDU carrying first information. In other words, when receiving the first information, the second management node may determine the SN by using the number of the protocol data unit carrying the first information, and obtain the second fresh parameter based on the HFN and the SN. Further, the second fresh parameter is added to the security context. In addition, in some solutions, the second fresh parameter may be further used as an input of an integrity protection algorithm in an integrity check process of the first information.

In some scenarios, the secure communication parameter can be further updated. In a possible implementation, the first management node may send parameter update information after the secure communication parameter is updated. Optionally, sending the parameter update information includes directly sending the parameter update information to the first management node, or forwarding the parameter update information through an intermediate node (for example, through one or more control nodes). Correspondingly, the second management node may receive the parameter update information from the first management node, and update a part of or all of parameters in a local secure communication parameter. The local secure communication parameter herein may also include the security context of the terminal node in the second management node.

For example, the secure communication parameter of the terminal includes the shared key, the identifier of the shared key, and the validity period of the shared key, and the parameter update information includes an updated shared key, a validity period of the updated shared key, and a validity period of the updated shared key.

For example, the secure communication parameter of the terminal includes the first fresh parameter, and the parameter update information includes an updated first fresh parameter.

For example, the secure communication parameter of the terminal includes the second fresh parameter, and the parameter update information includes an updated second fresh parameter.

For example, the secure communication parameter of the terminal includes a part of the second fresh parameter, and the parameter update information includes a part of an updated second fresh parameter. For example, the secure communication parameter includes an HFN in the GFN, and the parameter update information includes an updated HFN. In this case, the second management node obtains a new GFN based on the updated HFN and the SN.

Step S702: The second management node performs, based on the secure communication parameter, an association operation having the security context with the terminal node.

Specifically, the association operation with the security context includes: performing security protection (for example, encryption or integrity protection) on transmitted information by using the parameter in the security context, and a peer end may also obtain corresponding information by using the parameter in the security context. The following lists several possible implementations based on different content included in the secure communication parameter.

Implementation 1: The secure communication parameter includes a key, and the second management node performs security protection on signaling sent to the terminal node by using the key in the secure communication parameter, or obtains, by using the key in the secure communication parameter, content of security-protected signaling from the terminal node. The signaling includes association-related signaling.

For example, refer to FIG. 6. That the secure communication parameter includes the integrity protection key is used as an example. Integrity of the message M6 may be protected by the terminal node by using the integrity protection key, and the second management node may check the integrity of the message M6 by using the integrity protection key. When a check on the integrity of the message M6 succeeds, a message M7 is sent to the secure communication parameter, and integrity of the message M7 is also protected by using the integrity protection key. When a check on the integrity of the message M7 of the terminal node succeeds, association is completed.

For another example, refer to FIG. 6. That the secure communication parameter includes the encryption key is used as an example. When signaling plane encryption is enabled, the message M7 may be encrypted by using an encryption key. When the terminal node successfully decrypts the message M7, association is completed.

For another example, refer to FIG. 6. That the secure communication parameter includes the shared key is used as an example. The second management node derives the session key based on the shared key. Optionally, when a fresh parameter (for example, a counter) is used in a key derivation process, the fresh parameter may be reset to a preset value, or the fresh parameter may be included in the secure communication parameter. For example, the derived session key includes the integrity protection key and/or the encryption key. For details, refer to the foregoing two examples.

Implementation 2: The secure communication parameter includes a key negotiation parameter. FIG. 4 is used as an example. The secure communication parameter includes a parameter for obtaining a key KKE, a parameter for obtaining a key Kgt, or a parameter for obtaining a session key.

With reference to FIG. 4, for example, the secure communication parameter includes a key negotiation parameter KEt and a key negotiation parameter KEg. The second management node may obtain a key K_{KE} based on the key negotiation parameter KEt and the key negotiation parameter KEg. NONCEt and NONCEg may be included in the secure communication parameter, or may be determined by the second management node and/or the terminal node during association and provided to each other. In conclusion, the second management node obtains the shared key based on the key K_{KE}, NONCEt, and NONCEg, and further obtains the session key. Optionally, the counter may be set to a preset value, or included in the secure communication parameter.

Implementation 3: The secure communication parameter includes the fresh parameter. For a case in which both the fresh parameter and the key are included in the secure communication parameter, refer to the foregoing description. The following describes a case in which only the fresh parameter is included in the secure communication parameter.

For example, the secure communication parameter includes only the first fresh parameter. The second management node and the terminal node obtain a new shared key by exchanging key negotiation parameters, and obtain the session key based on the shared key and the first fresh parameter. In this case, because the first fresh parameter is updated after each key is generated, the second management node and the terminal node may still use a previous first fresh parameter to obtain the session key. In some scenarios, because a previous parameter is difficult to crack, even if an attacker obtains a key negotiation-related parameter by intercepting a communication process between the second management node and the terminal node, it is difficult to crack the session key. Therefore, communication security between the second management node and the terminal node can be improved.

For example, the secure communication parameter includes only the second fresh parameter, and the second fresh parameter may be used for encryption during a session. With reference to the association procedure shown in FIG. 5, the second management node and the terminal node obtain a new shared key by exchanging key negotiation parameters, and obtain the session key based on the shared key and the first fresh parameter. The second management node generates verification information based on the session key and the second fresh parameter, where the verification information is carried in the message M2. The terminal node needs to check integrity of the verification information based on the second fresh parameter and the session key. In other words, a previous second fresh parameter may be still used to obtain the session key during association. Because the second fresh parameter is updated after being used, it is difficult for the attacker to crack the second fresh parameter, thereby improving communication security.

Implementation 4: The secure communication parameter includes an identifier of a security algorithm. The second management node and the terminal node continue to use a previous security algorithm for the association process, and may not need to re-determine the security algorithm.

In conclusion, the secure communication parameter includes a parameter that is previously determined and that is related to communication security. When the terminal node is associated with the second management node, the previously determined parameter may be used. This can reduce time for re-determining the parameter between the terminal node and the second management node, and reduce a delay. In addition, this can avoid parameter exchange, thereby reducing parameter privacy and improving security. Especially when the secure communication parameter includes the key, signaling exchange can be significantly reduced, and the communication delay can be greatly reduced.

Implementation 5: The secure communication parameter may further include one or more of information about a key, an identity of the terminal node, and the like.

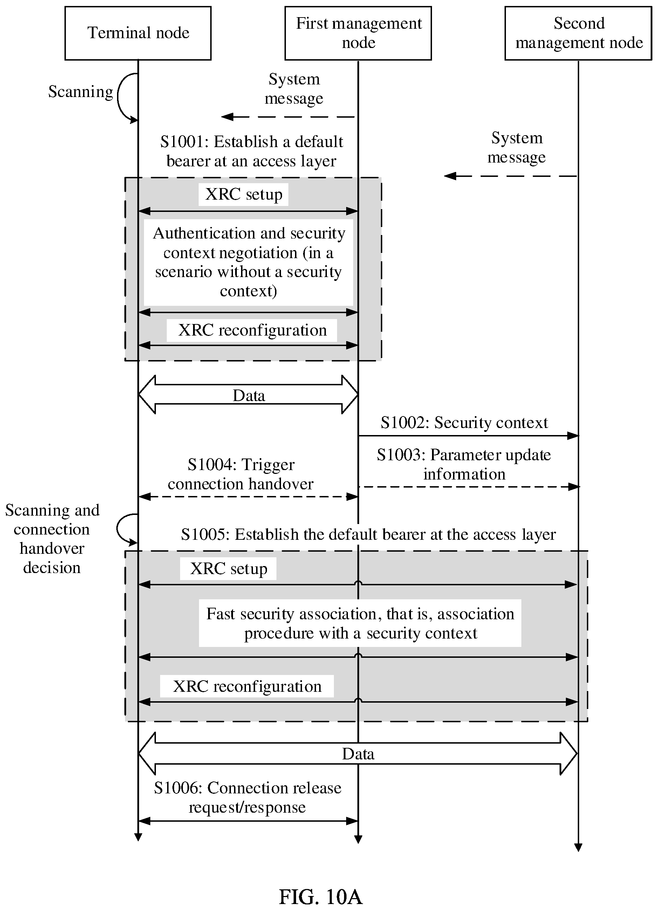

It should be understood that the foregoing implementations may be combined. For the combination case, the following provides examples with reference to FIG. 10A, FIG. 10B, FIG. 11A, FIG. 11B, FIG. 12A, and FIG. 12B. It should be noted that, in the foregoing implementations, the association operation is performed by using the key and the fresh parameter in the secure communication parameter. In some implementations, because the key (or the fresh parameter or the like) in the secure communication parameter is also consistent with the key in the security context, the two may also be replaced with each other. In other words, this application is also applicable to the following case: The second management node may also first establish the security context based on the secure communication parameter, and perform the association operation based on the parameter in the security context.

In a possible implementation, the terminal node may receive a connection indication from the first management node, where the connection indication is used to indicate the terminal node to connect to the second management node. Correspondingly, the terminal node performs the association operation with the second management node based on the connection indication. For example, the connection indication includes information about the second management node, for example, an ID or a network address of the second management node. A roaming scenario is used as an example. The connection indication may include a roaming request. Specifically, the first management node delivers the roaming request to the terminal node, to trigger the terminal node to be handed over to the second management node. Correspondingly, the terminal node establishes a connection to the second management node.

In a possible implementation, in the association operation, the second management node may receive a message from the terminal node, where the message carries an identity (referred to as a first identity for ease of differentiation) of the terminal node, and the second management node may query, based on the first identity, whether the second management node has the security context of the terminal node. When the second management node does not have the security context of the terminal node, the second management node may indicate that association of the terminal node fails, or indicate that the terminal node performs an association procedure without the security context. For example, the procedure shown in FIG. 5 is performed.

Optionally, in the association operation, the second management node may generate a new identity for the terminal node, for example, referred to as a second identity, and send the second identity to the terminal node.

In a possible implementation, after the second management node successfully establishes association with the terminal node, the second management node and the terminal node may transmit data to each other through a communication connection.

Optionally, if the second management node fails to establish association with the terminal node based on association with the security context, an association operation without the security context may be performed. For example, this is shown in FIG. 5. It should be understood that there are a plurality of possible causes for the association establishment failure. For example, the second management node does not have the security context of the terminal, or the second management node fails to verify integrity of the message, or the terminal node fails to verify the integrity of the message, or the terminal node cannot successfully decrypt the message from the second management node.

In some possible implementations, before the second management node establishes association with the terminal node, the terminal node and the first management node may still be in a communication connection state. In this case, after the second management node successfully establishes association with the terminal node, the terminal node may be disconnected from the first management node.

In some possible implementations, after the second management node establishes association with the terminal, the second management node may provide the secure communication parameter for the another management node or the control node, so that the another management node performs an association procedure that is with the security context with the terminal node.

Optionally, when the secure communication parameter is updated, the second management node may send parameter update information to the another management node or the control node.

In the embodiment shown in FIG. 7, when the terminal node is associated with the second management node, the terminal node may perform the association operation having the security context with the terminal node by using the secure communication parameter provided by the first management node. In other words, security of the information exchanged in the association operation is directly or indirectly ensured by using the security communication parameter. The association operation may be performed without re-negotiating with the terminal node to obtain the security context, so that signaling in an authentication process can be reduced, thereby reducing a signaling exchange delay. In addition, there is no need to re-determine the secure communication parameter, negotiate the security context, and the like, so that calculation amounts of the terminal node and the second management node can be reduced, thereby further shortening a connection establishment delay.

In the foregoing embodiment, it is mentioned that the first management node and the second management node may not be directly connected. The following provides an example description based on a case in which the first management node and the second management node are connected through the control node.

FIG. 9 is a schematic flowchart of another communication method according to an embodiment of this application. The communication method shown in FIG. 9 may include one or more of step S901 to step S905. It should be understood that, for ease of description, descriptions are provided in a sequence of S901 to S905, but this is not intended to limit that the steps are definitely performed in the foregoing sequence. An execution sequence, execution time, a quantity of execution times, and the like of the foregoing one or more steps are not limited in embodiments of this application. S901 to step S905 are specifically as follows.

Step S901: A first management node performs data transmission with a terminal node.

The first management node and the terminal node establish association, that is, the terminal accesses the first management node. There is a communication connection between the first management node and the terminal node, and data transmission may be performed based on the communication connection.

The first management node has a security context of the terminal node. For content included in the security context, refer to the foregoing descriptions, for example, FIG. 3.

Step S902: The first management node sends a secure communication parameter to the control node. Correspondingly, the control node may receive the secure communication parameter from the first management node.

For related descriptions of the secure communication parameter, refer to the foregoing descriptions. There are a plurality of possible designs for an occasion at which the first management node sends the security parameter. For example, the sending occasion may be sending the security parameter after the terminal node is associated, sending the security parameter when the terminal node is connected to another management node, sending the security parameter to the control node in response to instructions of the control node, or the like.

In some scenarios, the terminal node may measure a distance between the terminal node and the management node, quality of a communication channel between the terminal node and the management node, or the like, and determine, based on a measurement result, whether to connect to a new management node. For example, the quality of the communication channel may be indicated by one or more of the following parameters: communication signal strength, communication stability, a communication delay, and the like.

In a possible implementation, the terminal node periodically or aperiodically sends the measurement result to the first management node. The first management node may perform determining based on the measurement result, select an optimal management node as a target management node, and indicate the terminal node to connect to the target management node. The target management node may be the second management node. Further, optionally, the first management node may send information about the target management node to the control node.

Optionally, the secure communication parameter is sent through a secure channel. For example, the first management node synchronizes the security context of the terminal node connected to the first management node to the control node through the secure channel. The secure channel herein includes but is not limited to a CAPWAP channel or the like.

Step S903: The control node sends the secure communication parameter to the second management node. Correspondingly, the second management node receives the secure communication parameter from the control node.

Optionally, the secure communication parameter is sent through the secure channel. For example, the first management node sends the secure communication parameter to the second management node through the CAPWAP channel.

In a possible implementation, the control node sends the secure communication parameter to the target management node, and the second management node belongs to the target management node or is the target management node. For the target management node, refer to the description in step S902.

In some scenarios, the second management node is a node that supports a fast connection establishment manner. The fast connection establishment manner is a manner in which association with the terminal node is established by using a secure communication parameter from another node, and the another node includes the first management node and/or the control node.

Further, whether the second management node supports the fast connection establishment manner may be set by a user, may be determined by the second management node based on a security risk, or may be configured by the management node or the like. For example, the second management node reports one or more of a security requirement, a security capability, and the like of the second management node to the control node, and the control node evaluates whether the second management node meets a condition for supporting the fast connection establishment manner. When the second management node meets the condition for supporting fast connection establishment, the control node forwards the secure communication parameter from the first management node to the second management node.

In a possible implementation, the control node is connected to a plurality of management nodes, and the management node may send security capability information such as a security requirement of the management node or a trust degree between the management node and the first management node to the control node. Correspondingly, the control node determines, based on the security capability information reported by the management node, a node that supports the fast connection establishment manner in the plurality of nodes.

Further, the control node may send third information to the first management node, where the third information indicates a node that supports the fast connection establishment manner. For example, the node that supports the fast connection establishment manner includes the second management node. The first management node may provide the secure communication parameter for the second management node, or the first management node may indicate the terminal node to connect to the second management node in the fast connection establishment manner (that is, perform the association procedure with the security context).

Step S904: The second management node performs, based on the secure communication parameter, an association operation having the security context with the terminal node.

For example, the secure communication parameter includes the integrity protection key or includes the parameter for obtaining the integrity protection key. The terminal node may send the first information to the second management node, and integrity of the first information is protected by using the integrity protection key. Correspondingly, the second management node receives the first information, and checks the integrity of the first information by using the integrity protection key. When a check on the integrity of the first information succeeds, the second management node sends the second information to the terminal node, where integrity of the second information is protected by using the integrity protection key. Correspondingly, the terminal node receives the second information, and establishes association when a check on the integrity of the second information succeeds. Further, the terminal node may send a response message to the second management node, and association is completed.

Optionally, the secure communication parameter includes indication information of an integrity protection algorithm. When checking the integrity of the information and performing integrity protection, the second management node may implement integrity protection by using the integrity protection algorithm indicated by the indication information.

For example, the first information includes first verification information, and the first verification information is obtained by the terminal node based on the integrity protection key, the first information, and the integrity protection algorithm. The first management node may verify the first information based on the integrity protection key, the first information, and the integrity protection algorithm. If verification succeeds, integrity check succeeds. The integrity protection algorithm used herein may be specified by the indication information in the secure communication parameter.

Further, optionally, the secure communication parameter further includes the second fresh parameter. In an integrity check process, the terminal node may perform integrity check based on the second fresh parameter, the integrity protection key, and the integrity protection algorithm. For example, the first verification information is obtained based on the integrity protection key, the integrity protection algorithm, the second fresh parameter, and the first information.

Optionally, the secure communication parameter further includes an encryption key, or further includes indication information of the encryption algorithm. The second information may be encrypted by using the encryption key and the encryption algorithm. The second fresh parameter is further used in an optional encryption process.

In a possible implementation, the first management node may send handover indication information to the terminal node, where the handover indication information includes information about the second management node. The terminal node may receive the handover indication information, to perform an association procedure that is with the security context with the second management node. For example, the handover indication information is a roaming request instruction, indicating the terminal node to connect to the second management node.

For related descriptions, refer to the descriptions of step S702.

Optionally, the communication method shown in FIG. 9 further includes step S905. Details are as follows.

Step S905: The terminal node disconnects from the first management node.

For example, the terminal node and the first management node originally perform data transmission through a logical channel, and the terminal node and/or the first management node may release the logical channel.

In the embodiment shown in FIG. 9, the management node may provide the secure communication parameter of the terminal node connected to the management node to the control node, and the control node delivers the secure communication parameter to another management node, for example, the second management node, so that the another management node can perform an association operation having a security context with the terminal node. In this way, not only signaling overheads can be reduced, but also a calculation amount of the management node and the terminal node during association can be reduced, thereby greatly shortening a delay in establishing a communication connection.

The foregoing FIG. 7 and FIG. 9 provide a plurality of possible solutions. The following uses some possible designs as examples for description with reference to FIG. 10A, FIG. 10B, FIG. 11A, FIG. 11B, FIG. 12A, or FIG. 12B. It should be understood that for logic, terms, and the like in the embodiments shown in FIG. 10A, FIG. 10B, FIG. 11A, FIG. 11B, FIG. 12A, and FIG. 12B, refer to the foregoing.

FIG. 10A is a schematic flowchart of still another communication method according to an embodiment of this application. The communication method may include some or all of steps S1001 to S1006. Specifically, the implementations are as follows.

Step S1001: A terminal node establishes a default bearer at an access layer with a first management node.

In other words, the terminal node and the first management node establish an initial connection. A procedure may include an authentication process in a scenario without a security context and a security context negotiation procedure. For example, FIG. 5 shows an authentication and security context negotiation procedure in a scenario without a security context. It should be understood that, after the security context negotiation procedure, the first management node has the security context of the terminal node.

FIG. 10A further shows a possible process of establishing the connection. The first management node may send an X resource control (X resource control, XRC) setup message to the terminal node, and the terminal node may return a response message. The first management node performs authentication and security context negotiation with the terminal. The first management node delivers an XRC reconfiguration message to the terminal node, and data transmission may be performed after the access layer bearer is established. The X resource control message may be replaced with other information indicating a communication resource, and the communication resource is, for example, a channel. It should be understood that a signaling procedure of connection establishment herein is merely an example, and a specific implementation process may have another design.

Optionally, before the connection is established between the terminal node and the first management node, the terminal node may perform scanning, to select a management node to be connected.

Optionally, the management node, including the first management node and a second management node, may send a system message, so that another node can sense the management node. For example, the system message includes information about the management node that sends the message, so that the terminal node obtains the information about the management node.

Step S1002: The first management node sends a security context to the second management node.

Correspondingly, the second management node receives the security context from the first management node.

The first management node may be connected to the second management node, including a connection based on a wired communication technology and/or a connection based on a wireless communication technology. Optionally, the connection between the first management node and the second management node may further pass through an intermediate node, for example, a control node.

Optionally, the method may further include step S1003. Details are as follows.

Step S1003: The first management node sends parameter update information to the second management node.

Correspondingly, the second management node receives the parameter update information from the first management node.

It may be understood that, after the first management node obtains the security context, a parameter in the security context may be updated. When the security context is updated, for example, a key, an HFN, and the like is updated, the first management node may send the updated parameter to the second management node. Correspondingly, the second management node may obtain an update of the parameter, and replace a value of the parameter with an updated value. For example, the second management node replaces a shared key with an updated shared key. For another example, the second management node replaces an HFN in a GFN with an updated HFN, and when receiving a PUD next time, obtains a GFN based on an SN of a new PDU and the updated HFN.

Optionally, the method may further include step S1004. Details are as follows.

Step S1004: The first management node triggers connection handover.

For example, the first management node delivers a connection instruction to the terminal node, where the connection instruction includes information about a management node to which the terminal node is recommended to connect. Optionally, the terminal node may further perform scanning, and make a connection handover decision to determine the management node to be connected.

Step S1005: The terminal node establishes a default bearer at an access layer with the second management node.

In an establishment process, the terminal node and the second management node perform an association procedure in a scenario in which there is the security context

Optionally, the method may further include step S1006. Details are as follows.

Step S1006: The first management node and the terminal node perform a connection release request/response.

For example, the first management node sends the connection release request to the terminal node. Correspondingly, the terminal node responds to the request. The default bearer at the access layer between the terminal node and the second management node is released. Certainly, this is also applicable to a case in which the terminal node sends a connection release request.

Optionally, the connection release request may be replaced with an access link release request or the like, and is used to release the default bearer at the access layer.

In the embodiment shown in FIG. 10A, after establishing an access layer connection to the terminal node, the first management node may obtain the security context of the terminal node, and provide the security context of the terminal node to the second management node. At a subsequent moment, the terminal node may hand over an accessed management node, and perform an access procedure with the security context with the second management node.

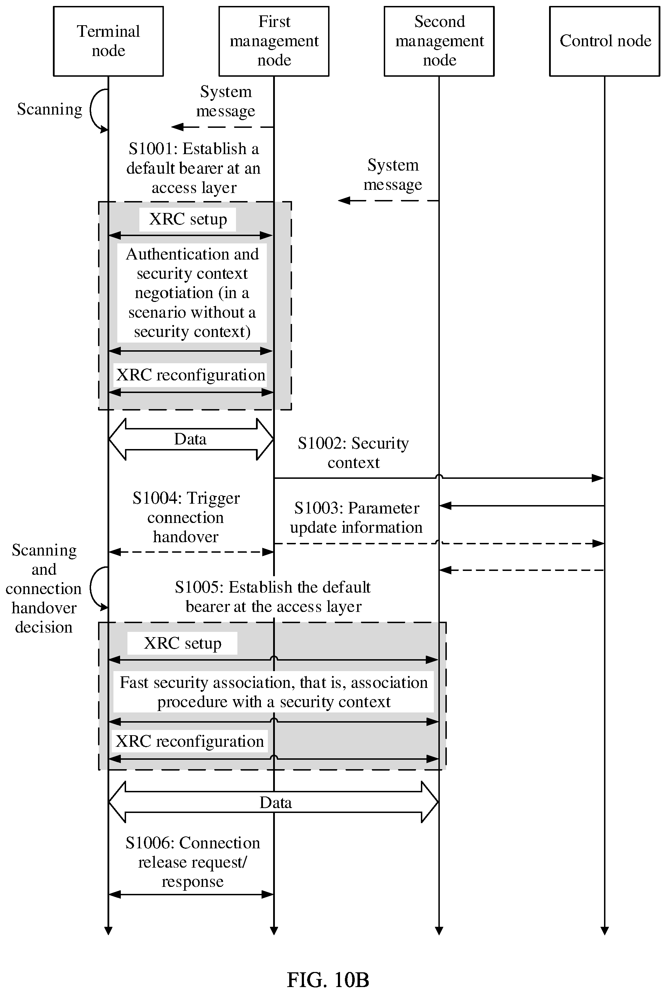

Optionally, as mentioned in step S1002, the first management node and the second management node may not be directly connected. FIG. 10B is a schematic flowchart of yet another communication method according to an embodiment of this application. For step S1001 and step S1004 to step S1006, refer to the embodiment in FIG. 10A. In FIG. 10B, the first management node is not directly connected to the second management node, but is connected to the second management node through a control node (there may be a plurality of intermediate control nodes). In step S1002, the first management node may send the security context to the control node, and the security context is forwarded to the second management node through the control node. Similarly, in step S1003, the parameter update information is also forwarded through the control node.

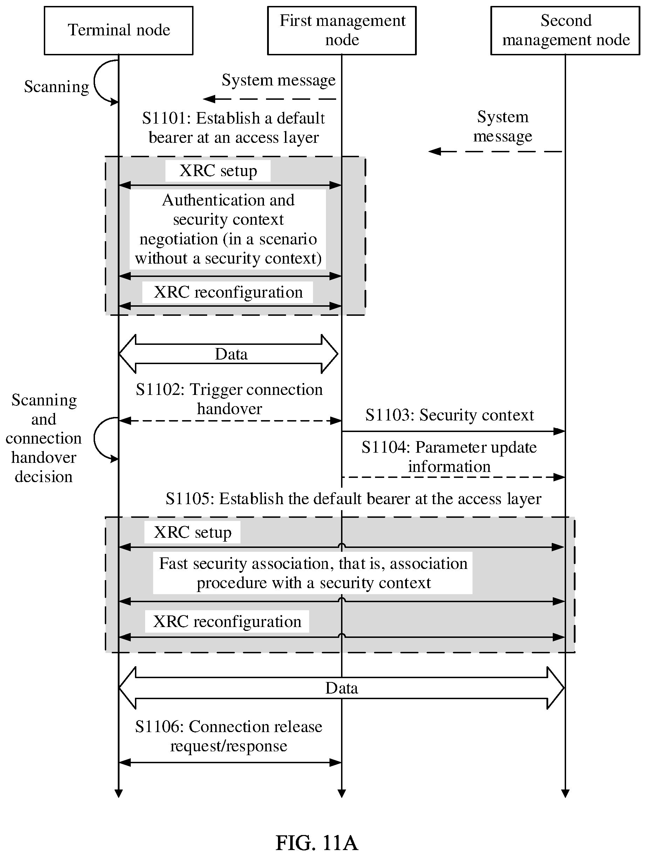

FIG. 11A is a schematic flowchart of still yet another communication method according to an embodiment of this application. In FIG. 11A, after triggering connection handover, the first management node provides the security context of the terminal node for another node.

Specifically, the communication method shown in FIG. 11A may include a part of or all of step S1101 to step S1106. Specifically, the implementations are as follows.

Step S1101: A terminal node establishes a default bearer at an access layer with a first management node.

Optionally, the method may further include step S1102. Details are as follows.

Step S1102: The first management node triggers connection handover.

Step S1103: The first management node sends the security context to the second management node.

Optionally, the method may further include step S1104. Details are as follows.

Step S1104: The first management node sends parameter update information to the second management node.

Step S1105: The terminal node establishes a default bearer at an access layer with the second management node.

In the establishment process, the terminal node and the second management node perform an association procedure in a scenario in which there is the security context.

Optionally, the method may further include step S1106. Details are as follows.

Step S1106: The first management node and the terminal node perform a connection release request/response.

For detailed descriptions of some steps shown in FIG. 11A, refer to the foregoing embodiments, for example, the embodiments in FIG. 7, FIG. 9, and FIG. 10A.

In the embodiment shown in FIG. 11A, after establishing the access layer connection to the terminal node, the first management node may obtain the security context of the terminal node. At a subsequent moment, when the terminal node needs to access the second management node, the first management node provides the security context of the terminal node for the second management node, so that the terminal node can perform an access procedure that is with the security context with the second management node.

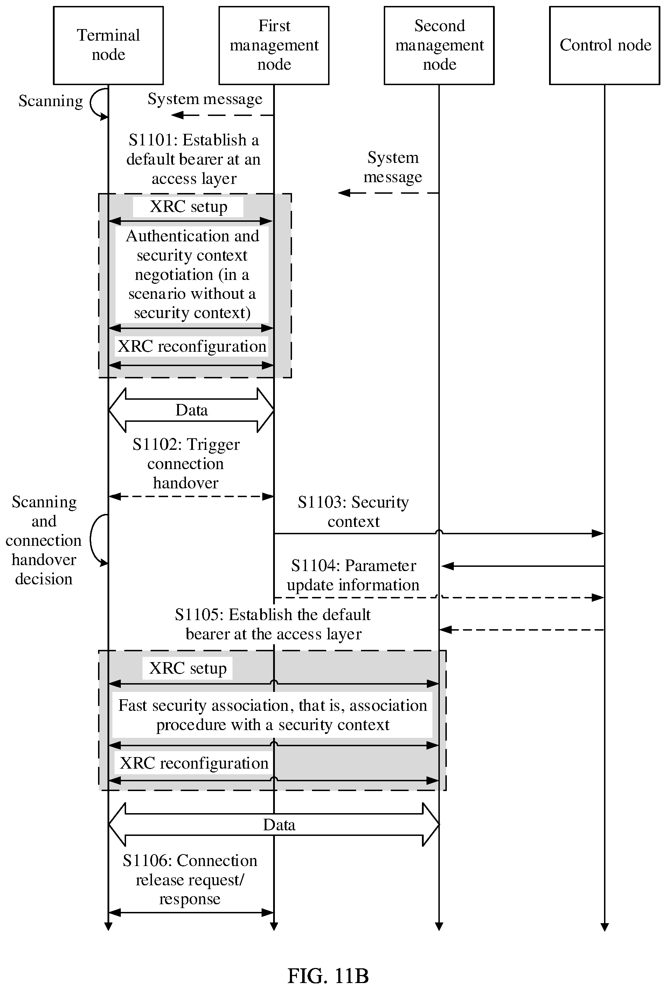

Optionally, the first management node and the second management node may not be directly connected. FIG. 11B is a schematic flowchart of further another communication method according to an embodiment of this application. For step S1101, step S1102, and steps S1105 and S1106, refer to the embodiment in FIG. 11A. In FIG. 11B, the first management node is not directly connected to the second management node, but is connected to the second management node through a control node (there may be a plurality of intermediate control nodes). In step S1103, the first management node may send the security context to the control node, and the security context is forwarded to the second management node through the control node. Similarly, in step S1104, the parameter update information is also forwarded through the control node.

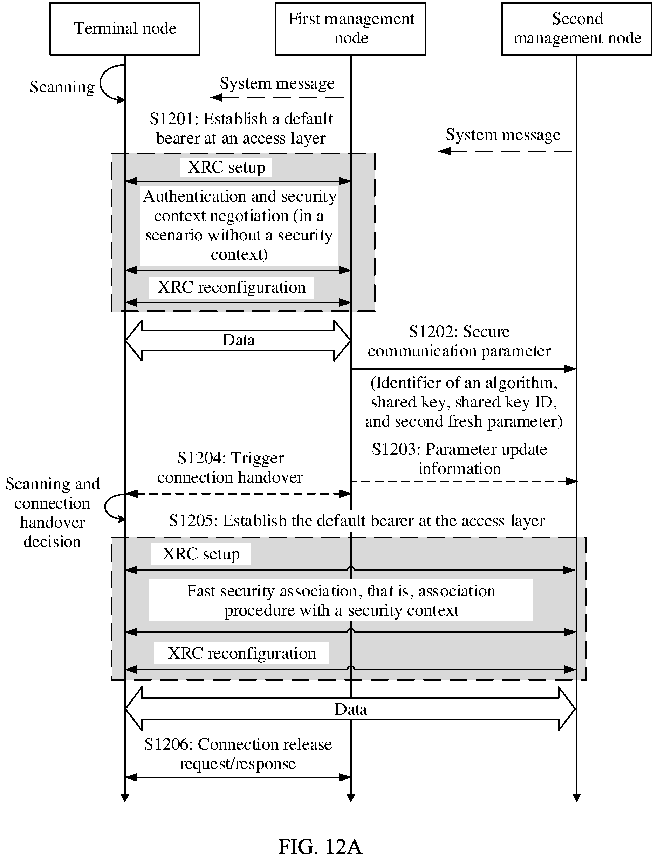

FIG. 12A is a schematic flowchart of further another communication method according to an embodiment of this application. In FIG. 12A, the first management node does not directly provide the security context of the terminal node, but provides the secure communication parameter. The secure communication parameter includes a part of parameters in the security context and/or the secure communication parameter includes information used to determine the parameters in the security context. After receiving the secure communication parameter, the second management node obtains the security context and may perform the association operation having the security context with the terminal node.

Specifically, the communication method shown in FIG. 12A may include a part of or all of steps S1201 to S1206. Specifically, the implementations are as follows.

Step S1201: A terminal node establishes a default bearer at an access layer with a first management node.

Optionally, the method may further include step S1202. Details are as follows.

Step S1202: The first management node sends the secure communication parameter to the second management node.

Optionally, the secure communication parameter includes indication information of a security algorithm (for example, an encryption algorithm and an integrity protection algorithm, or an authentication encryption algorithm and a key derivation function), a shared key (for example, Kgt), an identifier (for example, Kgt ID) of the shared key, and a second fresh parameter (for example, a counter).

Further, the secure communication parameter may further include a first identity of the terminal node. Further, the first identity may be allocated by the first management node to the terminal node.

Optionally, the method may further include step S1203. Details are as follows.

Step S1203: The first management node sends parameter update information to the second management node.

For example, the secure communication parameter includes parameters such as a temporary ID, Kgt, Kgt ID, and a counter. When the parameters such as the temporary ID, Kgt, Kgt ID, and the counter are updated, the first management node sends the updated parameters. For example, updated Kgt, updated Kgt ID, or the updated counter is sent to the second management node.

Step S1204: The first management node triggers connection handover.

Step S1205: The terminal node establishes a default bearer at an access layer with the second management node.

In the establishment process, the terminal node and the second management node perform an association procedure in a scenario in which there is the security context.

Optionally, the method may further include step S1206. Details are as follows.

Step S1206: The first management node and the terminal node perform a connection release request/response.

For detailed descriptions of some steps shown in FIG. 12A, refer to the foregoing embodiments, for example, the embodiments in FIG. 7, FIG. 9, FIG. 10A, and FIG. 11B.

In the embodiment shown in FIG. 12A, after establishing the access layer connection to the terminal node, the first management node may obtain the security context of the terminal node. The first management node provides the secure communication parameter for the second management node, and the second management node determines the security context of the terminal node based on the secure communication parameter. In a subsequent process in which the terminal node accesses the second management node, the terminal node and the second management node may perform an access procedure with the security context.

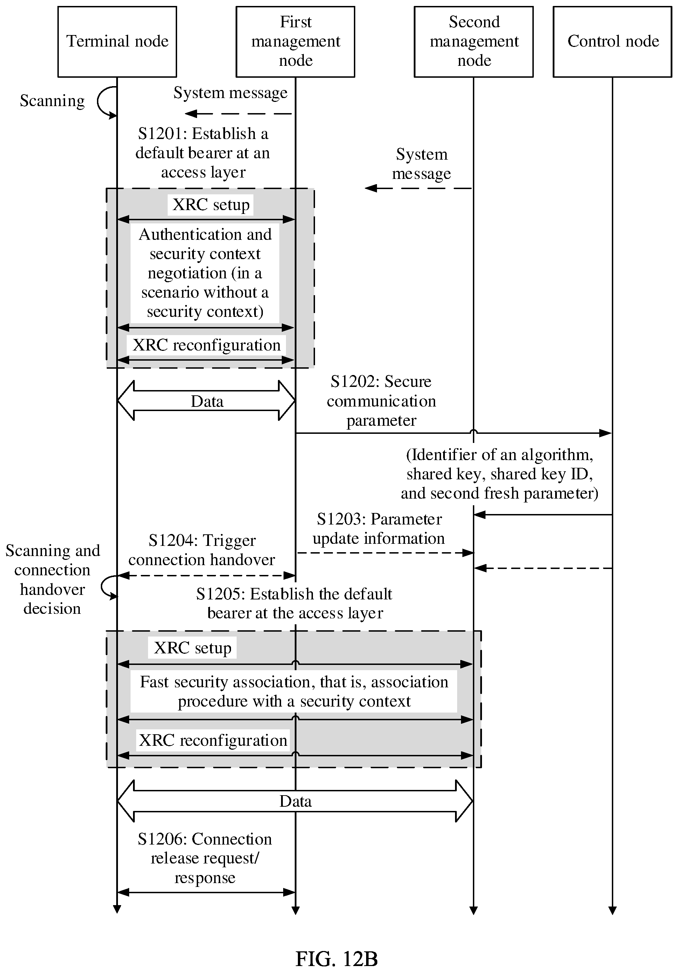

Optionally, the first management node and the second management node may not be directly connected. FIG. 12B is a schematic flowchart of further another communication method according to an embodiment of this application. For some steps, refer to the embodiment in FIG. 12A. In FIG. 12B, the first management node is not directly connected to the second management node, but is connected to the second management node through a control node (there may be a plurality of intermediate control nodes). In step S1202, the first management node may send the secure communication parameter to the control node, and the secure communication parameter is forwarded to the second management node through the control node. Similarly, in step S1203, the parameter update information is also forwarded through the control node.

The foregoing describes in detail the methods in embodiments of this application. The following provides apparatuses in embodiments of this application.

It should be understood that division into units in the apparatuses provided in embodiments of this application is merely logical function division. During actual implementation, all or some units may be integrated into one physical entity, or may be physically separated. In addition, a unit in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of units in the apparatus. The processor is, for example, a general-purpose processor like a central processing unit (central processing unit, CPU) or a microprocessor, and the memory is a memory inside the apparatus or a memory outside the apparatus.

Alternatively, a unit in the apparatus may be implemented in a form of a hardware circuit, and the hardware circuit may be designed to implement functions of a part or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement functions of a part or all of the units. For another example, in another implementation, the hardware circuit may be implemented by using a programmable logic device (programmable logic device, PLD). A field programmable gate array (Field Programmable Gate Array, FPGA) is used as an example. The hardware circuit may include a large quantity of logic gate circuits, and a connection relationship between the logic gate circuits is configured based on a configuration file, to implement functions of a part or all of the units.

In embodiments of this application, the units in the apparatus may be configured as one or more processors (or processing circuits) that implement the foregoing methods, for example, a CPU (graphics processing unit, GPU), a neural network processing unit (neural network processing Unit, NPU), a tensor processing unit (tensor processing unit, TPU), a deep learning processing unit (deep learning processing unit, DPU), a microprocessor (micro processor unit, MPU), a digital signal processor (digital signal processor, DSP), an ASIC, an FPGA, or a combination of at least two of these processor forms.

In addition, all or a part of the units of the apparatus may be integrated, or may be implemented independently. In an implementation, these units are integrated together, and implemented in a form of a system-on-a-chip (system-on-a-chip, or referred to as a system on chip). The SOC may include at least one processor, configured to implement any one of the foregoing methods or implement functions of units of the apparatus. Types of the at least one processor may be different. For example, the at least one processor includes a CPU and an FPGA, a CPU and an artificial intelligence processor, or a CPU and a GPU. The following lists several possible apparatuses.

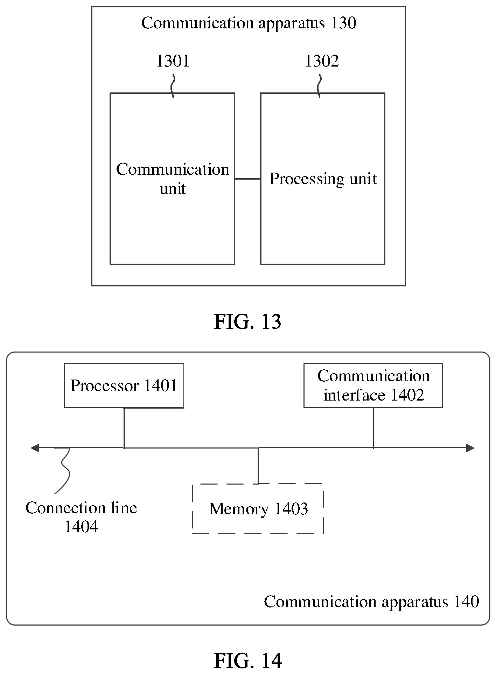

FIG. 13 is a diagram of a structure of a communication apparatus according to an embodiment of this application. Optionally, the communication apparatus 130 may be an independent device, for example, a node. Alternatively, the communication apparatus 130 may be a component in an independent device (for example, a node), for example, a chip or an integrated circuit. The communication apparatus 130 is configured to implement the foregoing communication methods, for example, the communication methods shown in FIG. 7, FIG. 9, FIG. 10A, FIG. 10B, FIG. 11A, FIG. 11B, FIG. 12A, or FIG. 12B.

In a possible design, the communication apparatus 130 includes a communication unit 1301 and a processing unit 1302. The communication apparatus 130 is configured to implement the method on a second management node side in the foregoing communication method.

In a possible implementation, the communication unit 1301 is configured to receive a secure communication parameter from a first management node, where the secure communication parameter includes a parameter used when the first management node communicates with the terminal node, and the secure communication parameter is associated with a security context of the terminal node.

The processing unit 1302 and the communication unit 1301 are further configured to perform, based on the secure communication parameter, an association operation having the security context with the terminal node.

For example, the processing unit is configured to complete one or more of the foregoing operations such as determining, checking (or verification), calculating, generating, updating, encrypting, or decrypting. The communication unit is configured to complete one or more of the foregoing operations such as sending or receiving.

In another possible implementation, the processing unit 1302 and the communication unit 1301 are further configured to perform data transmission with the second management node after association is established.

In another possible implementation, the security context of the terminal node includes a key. Optionally, when the security context includes the key, the security context may further include information about the key, where the information about the key includes one or more of an identifier of the key, a validity period of the key, start time of the key, and the like.

In another possible implementation, the security context of the terminal node includes a fresh parameter. A first fresh parameter and a second fresh parameter are example fresh parameters. In some solutions, the first fresh parameter is used to derive the session key, and the second fresh parameter is used as a parameter used for security protection.

Optionally, the second fresh parameter is determined by using a first number and a second number. Optionally, an initial value of the second number is predetermined. The second number may be updated. For example, the second number is updated when the first number is reversed. Optionally, the second fresh parameter is a global frame number (global frame number), and the GFN includes a high frame number (hyper frame number, HFN) and a serial number (serial number, or sequence number, SN). Optionally, the serial number is the same as the number of the protocol data unit PDU, and the HFN is predetermined.

Alternatively, the second fresh parameter is a predefined parameter value, for example, the HFN. Further, the second fresh parameter may be updated by using the number of the protocol data unit. For example, the second fresh parameter is updated when the SN is reversed.

In another possible implementation, the security context of the terminal includes information about a security algorithm, for example, indication information of the security algorithm.

In another possible implementation, the secure communication parameter is the security context of the terminal node.

In another possible implementation, the secure communication parameter includes a part of parameters in the security context, and/or includes a parameter used to obtain the part of parameters in the security context.

For example, the secure communication parameter includes a key. The key may be directly used as the session key for security protection in a communication process. Alternatively, the key may be used to derive the session key.

For example, the secure communication parameter includes a shared key, and the processing unit 2601 is further configured to obtain the session key based on the shared key. Further, the session key derived by the second management node is included in the security context of the terminal node. Optionally, the security context further includes the shared key.

Optionally, the fresh parameter, the key identifier, and the like may be further used when the session key is derived. For example, the secure communication parameter includes a shared key Kgt and a first security parameter counter, and the second terminal node derives the user plane encryption key based on the shared key Kgt and the first security parameter counter, and determines the user plane encryption key based on the identifier of the user plane encryption key.

For example, the secure communication parameter further includes an identifier of the shared key and the first fresh parameter, and the processing unit is configured to determine the session key based on the shared key, the identifier of the shared key, and the first fresh parameter.

For example, the secure communication parameter further includes the identifier of the security algorithm and the first identity of the terminal node.

In another possible implementation, the session key includes the integrity protection key. The communication unit 1301 is further configured to receive first information from the terminal node, where integrity of the first information is protected by using the integrity protection key;
The processing unit 1302 is further configured to check the integrity of the first information based on the integrity protection key.

The communication unit 1301 is further configured to send second information to the terminal node when a check on the integrity of the first information succeeds. Optionally, the second information is used by the terminal node to establish association with the second management node, and integrity of the second information is protected by using the integrity protection key.

Optionally, the session key includes the encryption key, and the second information is encrypted by using the encryption key.

In another possible implementation, the security context of the terminal includes the session key and the identifier of the first security algorithm. The first information includes first verification information, and the first verification information corresponds to the session key, the first information, and the first security algorithm.

The processing unit 1302 is further configured to verify first verification information based on the session key, the first information, and the first security algorithm.

For example, the session key is the integrity protection key, and the identifier of the first security algorithm is an identifier of the first integrity protection algorithm.

In another possible implementation, the security context includes the first identity of the terminal node. The processing unit 1302 is further configured to obtain the security context of the terminal node based on the first identity in the first information.

In another possible implementation, the processing unit 1302 is further configured to generate a second identity of the terminal node, where the identity is used to identify the terminal node. The communication unit 1301 is further configured to send the second identity to the terminal node. Optionally, the second identity is carried in the second information.

In another possible implementation, the second fresh parameter in the security context may be determined by the second management node. For example, the second fresh parameter may be predefined, for example, may be set to a 128-bit all-zero value or a preset value.

In another possible implementation, the security context of the terminal node includes the second fresh parameter. The processing unit 1302 is further configured to determine a first number based on a number of a protocol data unit PDU from the terminal node. The processing unit 1302 is further configured to determine the second fresh parameter based on the second number and the first number, where an initial value of the second number is predetermined, and the second number is updated when the first number is reversed.

In another possible implementation, the communication unit 1301 is further configured to receive parameter update information from the first management node. The processing unit 1302 is further configured to update a part of or all of parameters in the secure communication parameter based on the parameter update information. Updating the part of or all of the parameters in the secure communication parameter may include updating a part of or all of parameters in the security context.

In another possible implementation, the first management node is directly connected to or indirectly connected to the communication apparatus 130. The connection herein may be wired or wireless. When the first management node and the communication apparatus 130 are directly connected, the communication apparatus 130 may receive the secure communication parameter sent by the first management node. The indirect connection may be performed by using an intermediate node, and the intermediate node forwards information between the first management node and the second management node.

For example, that the communication apparatus 130 receives the secure communication parameter from the first management node includes: The communication unit 1301 receives the secure communication parameter forwarded by the control node, where the control node is communicatively connected to the first management node and the communication apparatus 130.

In another possible implementation, the secure communication parameter is transmitted by using a packet that complies with a CAPWAP protocol.

In another possible implementation, the communication unit 1301 and the processing unit 1302 are further configured to perform, when association fails, an association operation without a security context with the terminal node.

In another possible implementation, the communication apparatus 130 is a node that supports a fast connection establishment manner, or the communication apparatus 130 belongs to a node that supports the fast connection establishment manner.

In another possible implementation, the communication unit 1301 is further configured to send the secure communication parameter between the second management node and the terminal node to the control node. The secure communication parameter between the second management node and the terminal node is used to obtain the security context of the terminal node.

In another possible implementation, the communication unit 1301 is further configured to send parameter update information to the control node, where the parameter update information is used to update the secure communication parameter between the second management node and the terminal node.

In a possible design, the communication apparatus 130 includes the communication unit 1301 and the processing unit 1302. The communication apparatus 130 is configured to implement the method on the terminal node side in the foregoing communication method.

In a possible implementation, the communication unit 1301 and the processing unit 1302 are configured to perform data transmission with the first management node, where the first management node has the security context of the terminal node;

The communication unit 1301 and the processing unit 1302 are further configured to perform, when a connection establishment condition is met, the association operation having the security context with the second management node, where the second management node has the security context of the terminal node.

Optionally, the communication unit 1301 and the processing unit 1302 are further configured to perform data transmission with the second management node.

In another possible implementation, the communication unit 1301 is further configured to receive a roaming request from the first management node, where the roaming request indicates the terminal node to perform connection handover. Further, in response to the roaming request, the communication apparatus 130 performs the association operation having the security context with the second management node.

In another possible implementation, the communication unit 1301 and the processing unit 1302 are further configured to measure a distance between the first management node and the terminal node and a distance between the second management node and the terminal node. The connection establishment condition includes: the distance between the second management node and the terminal node is less than the distance between the first management node and the terminal node.

In another possible implementation, the communication unit 1301 and the processing unit 1302 are further configured to disconnect data transmission with the first management node.

In another possible implementation, the communication unit 1301 is further configured to receive handover indication information from the first management node, where the handover indication information includes information indicating the second management node.

In another possible implementation, the second management node is a node that supports the fast connection establishment manner.

In another possible implementation, the security context of the terminal node includes an integrity protection key. The communication unit 1301 is further configured to send first information to the second management node, where integrity of the first information is protected by using the integrity protection key.

The communication unit 1301 is further configured to receive second information from the second management node, where the second information is used by the terminal node to establish association with second management node, and integrity of the second information is protected by using the integrity protection key.

The processing unit 1302 is further configured to check the integrity of the first information based on the integrity protection key.

When a check on the integrity of the first information succeeds, association is completed.

In another possible implementation, the communication unit 1301 and the processing unit 1302 are further configured to perform, when association fails, an association operation without a security context with the terminal node.

In a possible design, the communication apparatus 130 includes the communication unit 1301 and the processing unit 1302, and the communication apparatus 130 is configured to implement the method on the first management node side in the foregoing communication method.

In a possible implementation, the communication unit 1301 and the processing unit 1302 are configured to perform data transmission with the terminal node.

The communication unit 1301 is further configured to send the secure communication parameter between the first management node and the terminal node to the first management node, where the secure communication parameter is associated with the security context of the terminal node, and the secure communication parameter is used by the second management node to perform an association procedure that is with the security context with the terminal node.

In another possible implementation, the communication unit 1301 is further configured to send parameter update information to the first management node, where the parameter update information is used to update a part of or all of parameters in the secure communication parameter.

In a possible implementation, the communication unit 1301 is further configured to send the secure communication parameter between the control node and the terminal node to the control node, and the control node is configured to provide the secure communication parameter between the control node and the terminal node for the second management node.

In a possible implementation, the parameter update information is sent to the control node, and the control node is configured to provide the parameter update information for the second management node.

In another possible implementation, the communication unit 1301 is further configured to send handover indication information to the terminal node, where the handover indication information includes information indicating the second management node.

In another possible implementation, the communication unit 1301 is further configured to receive third information from the control node, where the third information indicates a node that supports the fast connection establishment manner. The node that supports the fast connection establishment manner includes the second management node. The fast connection establishment manner is a manner in which association with the terminal node is established by using a secure communication parameter from another node.

In a possible design, the communication apparatus 130 includes the communication unit 1301 and the processing unit 1302. The communication apparatus 130 is configured to implement the method on the control node side in the foregoing communication method.

In a possible implementation, the communication unit 1301 is configured to receive the secure communication parameter between the first management node and the terminal node from the first management node. The communication unit 1301 is further configured to send the secure communication parameter to the second management node, where the secure communication parameter is associated with the security context of the terminal node, and the secure communication parameter is used by the second management node to perform the association procedure that is with the security context with the terminal node.

In a possible implementation, the communication unit 1301 is further configured to receive parameter update information from the first management node, where the parameter update information is used to update a part of or all of parameters in the secure communication parameter. The communication unit 1301 is further configured to send the parameter update information to the second management node.

In a possible implementation, the communication unit 1301 is further configured to send third information to the first management node, where the third information indicates a node that supports the fast connection establishment manner. The node that supports the fast connection establishment manner includes the second management node. The fast connection establishment manner is a manner in which association with the terminal node is established by using a secure communication parameter from another node.

In a possible implementation, the communication unit 1301 is further configured to determine, based on security requirements of a plurality of management nodes and/or trust degrees between the plurality of management nodes and the first management node, a node that supports the fast connection establishment manner in the plurality of nodes, where the plurality of management nodes are connected to the control node, and the plurality of management nodes include the second management node.

FIG. 14 is a diagram of a structure of another communication apparatus according to an embodiment of this application. The communication apparatus 140 may be an independent device, for example, a node, or may be a component included in an independent device, for example, a chip, a software module, or an integrated circuit. The communication apparatus 140 may include at least one processor 1401 and a communication interface 1402. Optionally, the communication apparatus 140 may further include at least one memory 1403. Further, optionally, the communication apparatus 140 may further include a connection line 1404. The processor 1401, the communication interface 1402, and/or the memory 1403 are connected through the connection line 1404, and/or communicate with each other through the connection line 1404, to transfer a control signal and/or a data signal.

The processor 1401 is a module for performing an arithmetic operation and/or a logical operation, and may specifically include one or more of the following modules: a filter, a modem, a power amplifier, a low noise amplifier (low noise amplifier, LNA), a baseband processor, a radio frequency processor, a radio frequency circuit, a central processing unit (central processing unit, CPU), an application processor (application processor, AP), a microcontroller unit (microcontroller unit, MCU), an electronic control unit (electronic control unit, ECU), a graphics processing unit (graphics processing unit, GPU), a microprocessor unit (microprocessor unit, MPU), an application-specific integrated circuit (application-specific integrated circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor, or the like.

The communication interface 1402 may be configured to provide information input or output to the at least one processor, or configured to receive a signal sent from the outside and/or send a signal to the outside.

For example, the communication interface 1402 may include an interface circuit.

For example, the communication interface 1402 may include a wired link interface like an Ethernet cable, or may be a wireless link (Wi-Fi, Bluetooth, universal wireless transmission, an in-vehicle short-range communication technology, or another short-range wireless communication technology) interface.

Optionally, the communication interface 1402 may further include a radio frequency transmitter, an antenna, and the like. When the communication interface 1402 includes an antenna, there may be one or more antennas.

In a possible design, if the communication apparatus 140 is an independent device, the communication interface 1402 may include a receiver and a transmitter. The receiver and the transmitter may be a same component or different components. When the receiver and the transmitter are a same component, the component may be referred to as a transceiver.

In another possible design, if the communication apparatus 140 is a chip or a circuit, the communication interface 1402 may include an input interface and an output interface, and the input interface and the output interface may be a same interface or different interfaces.

Optionally, a function of the communication interface 1402 may be implemented via a transceiver circuit or a dedicated transceiver chip.

The memory 1403 is configured to provide storage space, and the storage space may store data, for example, an operating system and a computer program. The memory 1403 may be one or a combination of a random access memory (random access memory, RAM), a read-only memory (read-only memory, ROM), an erasable programmable read only memory (erasable programmable read only memory, EPROM), a compact disc read-only memory (compact disc read-only memory, CD-ROM), and the like.

Functions and actions of the modules or units in the communication apparatus 140 listed above are merely examples for description.

The functional units in the communication apparatus 140 may be configured to implement the foregoing communication methods, for example, the communication methods shown in FIG. 7, FIG. 9, FIG. 10A, FIG. 10B, FIG. 11A, FIG. 11B, FIG. 12A, or FIG. 12B, for example, configured to perform the methods performed by the first management node, the second management node, the terminal node, the management node, or the like.

Optionally, the processor 1401 may be a processor (referred to as a dedicated processor for ease of differentiation) specially configured to perform the foregoing method, or may be a processor (referred to as a dedicated processor for ease of differentiation) that invokes a computer program to perform the foregoing method. Optionally, the at least one processor may alternatively include both a dedicated processor and a general-purpose processor.

Optionally, if the communication apparatus 140 includes at least one memory 1403, and the processor 1401 implements the foregoing communication method by invoking a computer program, the computer program may be stored in the memory 1403.

An embodiment of this application further provides a chip. The chip includes a logic circuit and a communication interface. The communication interface is configured to receive a signal or send a signal, and the logic circuit is configured to receive a signal or send a signal through the communication interface. The chip is configured to implement the foregoing communication method, for example, the communication method shown in FIG. 7, FIG. 9, FIG. 10A, FIG. 10B, FIG. 11A, FIG. 11B, FIG. 12A, or FIG. 12B.

An embodiment of this application further provides a computer-readable storage medium. The computer-readable storage medium stores instructions. When the instructions are run on at least one processor (or a communication apparatus), the foregoing communication method, for example, the communication method shown in FIG. 7, FIG. 9, FIG. 10A, FIG. 10B, FIG. 11A, FIG. 11B, FIG. 12A, or FIG. 12B, is implemented.

An embodiment of this application further provides a computer program product. The computer program product includes computer instructions. The computer instructions are used to implement the foregoing communication method, for example, the communication method shown in FIG. 7, FIG. 9, FIG. 10A, FIG. 10B, FIG. 11A, FIG. 11B, FIG. 12A, or FIG. 12B.

An embodiment of this application further provides a terminal. The terminal includes the communication apparatus 130 and/or the communication apparatus 140.

In a possible implementation, the terminal includes a terminal node. Further, the terminal further includes a first management node and/or a second management node. Further, the terminal further includes a control node.

For example, the terminal may include an intelligent terminal or a transportation vehicle, for example, a vehicle, a robot, an unmanned aerial vehicle, a ship, or a vessel. The vehicle is a vehicle in a broad sense, and may be a transportation vehicle (for example, a commercial vehicle, a passenger vehicle, a motorcycle, a flight vehicle, or a train), an industrial vehicle (for example, a forklift, a trailer, or a tractor), an engineering vehicle (for example, an excavator, a bulldozer, or a crane), an agricultural device (for example, a lawn mower or a harvester), or the like. For another example, the robot may be a robot such as an automated guided vehicle (automated guided vehicle, AGV), a walkable conversational robot, or a service robot.

It should be noted that, in embodiments of this application, the word "example" or "for example" or the like represents giving an example, an illustration, or a description. Any embodiment or design scheme described as an "example" or "for example" in this application should not be explained as being more preferred or having more advantages than another embodiment or design scheme. Exactly, use of the expression "example", "for example", or the like is intended to present a related concept in a specific manner.

"At least one" in embodiments of this application means one or more, and "a plurality of" means two or more. "At least one of the following items (pieces)" or a similar expression thereof means any combination of these items, including a single item (piece) or any combination of a plurality of items (pieces).

For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For another example, the first node and the second node are merely used to facilitate description of fresh parameters in different implementations, and do not represent different execution operations, importance, structures, and the like.

Based on the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

## Claims

1. A communication method, applied to a second management node (AP 2), wherein the method comprises:
receiving a secure communication parameter from a first management node, wherein the secure communication parameter comprises a parameter used when the first management node communicates with a terminal node, and the secure communication parameter is associated with a security context of the terminal node; and
performing, based on the secure communication parameter, an association operation having the security context with the terminal node.

2. The method according to claim 1, wherein the security context of the terminal node comprises one or more of the following parameters:
a shared key, a first fresh parameter, a session key, indication information of a security algorithm, a first identity of the terminal node, and a second fresh parameter; and
the first fresh parameter is used to derive the session key, and the second fresh parameter is used as a parameter used for communication encryption.

3. The method according to claim 2, wherein the secure communication parameter comprises the security context of the terminal node.

4. The method according to claim 1 or 2, wherein the secure communication parameter comprises the shared key, and the method further comprises:
obtaining the session key based on the shared key, wherein the session key is comprised in the security context.

5. The method according to claim 4, wherein the secure communication parameter further comprises an identifier of the shared key and the first fresh parameter, and obtaining the session key based on the shared key comprises:
determining the session key based on the shared key, the identifier of the shared key, and the first fresh parameter.

6. The method according to claim 4 or 5, wherein the session key comprises an integrity protection key; and
performing, based on the secure communication parameter, the association operation having the security context with the terminal node comprises:
receiving first information from the terminal node, wherein integrity of the first information is protected by using the integrity protection key;
checking the integrity of the first information based on the integrity protection key; and
when a check on the integrity of the first information succeeds, sending second information to the terminal node, wherein the second information is used by the terminal node to establish association with the second management node, and integrity of the second information is protected by using the integrity protection key.

7. The method according to claim 4 or 5, wherein the security context of the terminal node comprises the second fresh parameter, and the method further comprises:
determining a first number based on a number of a protocol data unit PDU from the terminal node; and
determining the second fresh parameter based on a second number and the first number, wherein an initial value of the second number is predetermined, and the second number is updated when the first number is reversed.

8. The method according to any one of claims 1 to 7, wherein the method further comprises:
receiving parameter update information from the first management node; and
updating a part of or all of parameters in the secure communication parameter based on the parameter update information.

9. The method according to claim 8, wherein the secure communication parameter of the terminal node comprises the shared key, the identifier of the shared key, and a validity period of the shared key, and the parameter update information comprises an updated shared key, and the validity period of the updated shared key;
the secure communication parameter of the terminal comprises the first fresh parameter, and the parameter update information comprises an updated first fresh parameter;
the secure communication parameter of the terminal comprises the second fresh parameter, and the parameter update information comprises an updated second fresh parameter; or
the secure communication parameter of the terminal comprises a part of the second fresh parameter, and the parameter update information comprises a part of an updated second fresh parameter.

10. The method according to any one of claims 1 to 9, wherein receiving the secure communication parameter from the first management node comprises:
receiving the secure communication parameter forwarded by a control node, wherein the control node is communicatively connected to the first management node and the second management node.

11. The method according to any one of claims 1 to 10, wherein the secure communication parameter is transmitted by using a packet that complies with a CAPWAP protocol.

12. The method according to any one of claims 1 to 11, wherein the method further comprises:
when association fails, performing an association operation without the security context with the terminal node.

13. The method according to any one of claims 1 to 12, wherein the second management node is a node that supports a fast connection establishment manner; and
the fast connection establishment manner is a manner in which association with the terminal node is established by using a secure communication parameter from another node, and the another node comprises the first management node and/or the control node.

14. A communication method, applied to a terminal node, wherein the method comprises:
performing data transmission with a first management node, wherein the first management node has a security context of the terminal node; and
when a connection establishment condition is met, performing an association operation having a security context with a second management node, wherein the second management node has the security context of the terminal node.

15. The method according to claim 14, wherein the connection establishment condition comprises:
receiving a roaming request from the first management node, wherein the roaming request indicates the terminal node to perform connection handover.

16. The method according to claim 14, wherein the method further comprises:
measuring a distance between the first management node and the terminal node and a distance between the second management node and the terminal node, wherein
the connection establishment condition comprises: the distance between the second management node and the terminal node is less than the distance between the first management node and the terminal node.

17. The method according to claim 16, wherein after performing the association operation having the security context with the second management node, the method further comprises:
disconnecting data transmission with the first management node.

18. The method according to any one of claims 15 to 17, wherein the method further comprises:
receiving handover indication information from the first management node, wherein the handover indication information comprises information indicating the second management node.

19. The method according to any one of claims 15 to 18, wherein the second management node is a node that supports a fast connection establishment manner; and
the fast connection establishment manner is a manner in which association with the terminal node is established by using a secure communication parameter from another node, and the another node comprises the first management node.

20. The method according to any one of claims 15 to 17, wherein the security context of the terminal node comprises an integrity protection key; and
performing the association operation having the security context with the second management node comprises:
sending first information to the second management node, wherein integrity of the first information is protected by using the integrity protection key;
receiving second information from the second management node, wherein the second information is used by the terminal node to establish association with the second management node, and integrity of the second information is protected by using the integrity protection key;
checking the integrity of the first information based on the integrity protection key; and
when a check on the integrity of the first information succeeds, association is completed.

21. The method according to any one of claims 1 to 11, wherein the method further comprises:
when association fails, performing an association operation without the security context with the terminal node.

22. A communication method, applied to a first management node, wherein the first management node has a security context of a terminal node, and the method comprises:
performing data transmission with the terminal node; and
sending a secure communication parameter between the first management node and the terminal node to a second management node, wherein the secure communication parameter is associated with the security context of the terminal node, and the secure communication parameter is used by the second management node to perform an association procedure that is with the security context with the terminal node.

23. The method according to claim 22, wherein the security context of the terminal node comprises one or more of the following:
a shared key, a first fresh parameter, a session key, an identifier of a security algorithm, a first identity of the terminal node, and a second fresh parameter; and
the first fresh parameter is used to derive the session key, and the second fresh parameter is used as an input of a cryptographic algorithm used for communication encryption.

24. The method according to claim 22 or 23, wherein the secure communication parameter is the security context of the terminal node; or
the secure communication parameter comprises the shared key, and the shared key is used to derive the session key.

25. The method according to any one of claims 22 to 24, wherein the method further comprises:
sending parameter update information to the second management node, wherein the parameter update information is used to update a part of or all of parameters in the secure communication parameter.

26. The method according to any one of claims 22 to 25, wherein the method further comprises:
sending handover indication information to the terminal node, wherein the handover indication information comprises information indicating the second management node.

27. The method according to any one of claims 22 to 26, wherein the second management node is connected to a control node, and sending the secure communication parameter between the first management node and the terminal node to the second management node comprises:
sending the secure communication parameter between the first management node and the terminal node to the control node, wherein the control node is configured to provide the secure communication parameter between the first management node and the terminal node for the second management node.

28. The method according to claim 25, wherein the second management node is connected to a control node, and sending the parameter update information to the second management node comprises:
sending the parameter update information to the control node, wherein the control node is configured to provide the parameter update information for the second management node.

29. The method according to claim 27 or 28, wherein the method further comprises:
receiving third information from the control node, wherein the third information indicates a node that supports a fast connection establishment manner, the node that supports the fast connection establishment manner comprises the second management node, and the fast connection establishment manner is a manner in which association with the terminal node is established by using a secure communication parameter from another node.

30. A communication method, applied to a control node, wherein the control node is connected to a first management node and a second management node, and the method comprises:
receiving a secure communication parameter between the first management node and a terminal node from the first management node; and
sending the secure communication parameter to the second management node, wherein the secure communication parameter is associated with a security context of the terminal node, and the secure communication parameter is used by the second management node to perform an association procedure that is with the security context with the terminal node.

31. The method according to claim 30, wherein the security context of the terminal node comprises one or more of the following:
a shared key, a first fresh parameter, a session key, an identifier of a security algorithm, a first identity of the terminal node, and a second fresh parameter; and
the first fresh parameter is used to derive the session key, and the second fresh parameter is used as an input of a cryptographic algorithm used for communication encryption.

32. The method according to claim 30 or 31, wherein the secure communication parameter is the security context of the terminal node; or
the secure communication parameter comprises the shared key, and the shared key is used to derive the session key.

33. The method according to any one of claims 30 to 32, wherein the method comprises:
receiving parameter update information from the first management node, wherein the parameter update information is used to update a part of or all of parameters in the secure communication parameter; and
sending the parameter update information to the second management node.

34. The method according to any one of claims 30 to 33, wherein the method further comprises:
sending third information to the first management node, wherein the third information indicates a node that supports a fast connection establishment manner, the node that supports the fast connection establishment manner comprises the second management node, and the fast connection establishment manner is a manner in which association with the terminal node is established by using a secure communication parameter from another node.

35. The method according to claim 34, wherein the method comprises:
determining, based on security requirements of a plurality of management nodes and/or trust degrees between the plurality of management nodes and the first management node, a node that supports the fast connection establishment manner in the plurality of nodes, wherein the plurality of management nodes are connected to the control node, and the plurality of management nodes comprise the second management node.

36. A communication apparatus, wherein the communication apparatus comprises a communication unit and a processing unit, and the communication apparatus is configured to perform the method according to any one of claims 1 to 13, claims 14 to 21, claims 22 to 29, and claims 30 to 35.

37. A communication apparatus, comprising a processor, wherein
when the processor invokes a computer program or instructions in a memory, the method according to any one of claims 1 to 13, claims 14 to 21, claims 22 to 29, and claims 30 to 35 is performed.

38. A communication apparatus, comprising a logic circuit and an interface, wherein the logic circuit is coupled to the interface; and
the interface is configured to input to-be-processed data, the logic circuit processes the to-be-processed data according to the method in any one of claims 1 to 13, claims 14 to 21, claims 22 to 29, and claims 30 to 35, to obtain processed data, and the interface is configured to output the processed data.

39. A computer-readable storage medium, wherein
the computer-readable storage medium is configured to store instructions or a computer program, and when the instructions or the computer program are/is executed, the method according to any one of claims 1 to 13, claims 14 to 21, claims 22 to 29, and claims 30 to 35 is implemented.

40. A computer program product, comprising: instructions or a computer program, wherein
when the instructions or the computer program are/is executed, the method according to any one of claims 1 to 13, claims 14 to 21, claims 22 to 29, and claims 30 to 35 is performed.

41. A vehicle, comprising the communication apparatus according to claim 36, the communication apparatus according to claim 37, or the communication apparatus according to claim 38.

42. A communication system, comprising a second management node, a terminal node, and a first management node, wherein
the second management node is configured to perform the method according to any one of claims 1 to 13;
the terminal node is configured to perform the method according to any one of claims 14 to 21; and
the first management node is configured to perform the method according to any one of claims 22 to 29.

43. The communication system according to claim 41, wherein the communication system further comprises a control node, and the control node is configured to perform the method according to any one of claims 30 to 35.
